# FASCICULE DE BREVET EUROPEEN

(11) **EP 3 472 558 B1**
(45) Date de publication et mention de la délivrance du brevet: **31.08.2022**
(21) Numéro de dépôt: 17745388.3
(22) Date de dépôt: 20.06.2017
(51) Int. Cl.: G01C 19/72, G02F 1/35

(54) **SYSTÈME DE MESURE ET GYROMÈTRE COMPORTANT UN TEL SYSTÈME**
MESSSYSTEM UND GYROMETER MIT SOLCH EINEM SYSTEM
MEASURING SYSTEM AND GYROMETER COMPRISING SUCH A SYSTEM

(30) Priorité: 20.06.2016 FR 1655730
(43) Date de publication de la demande: 24.04.2019
(73) Titulaire: Ixblue, 78100 Saint-Germain-en Laye (FR)
(72) Inventeur: DUCLOUX, Eric, 92500 Rueil Malmaison (FR)
(74) Mandataire: Jacobacci Coralis Harle
(86) Numéro de dépôt international: PCT/FR2017/051632
(87) Numéro de publication internationale: WO 2017/220922

(56) Documents cités:
- WO-A1-2015/128588
- US-A- 5 331 404
- US-B1- 6 370 289

## Description

### DOMAINE TECHNIQUE AUQUEL SE RAPPORTE L'INVENTION

La présente invention concerne la métrologie optique par méthode interférométrique.

Elle concerne plus particulièrement un système de mesure interférométrique permettant de réduire l'influence du bruit d'intensité qui affecte l'onde lumineuse émise par la source à spectre large, utilisée dans ce système de mesure.

L'invention trouve une application particulièrement avantageuse dans la réalisation d'un gyromètre interférométrique à fibre optique comprenant un tel système de mesure et dans la réalisation d'une centrale d'attitude ou de navigation inertielle utilisant un tel gyromètre.

### ARRIERE-PLAN TECHNOLOGIQUE

De manière connue (voir notamment H.C. Lefèvre, « The Fiber-Optic Gyroscope », 2nd Edition, Artech House, 2014), un gyromètre interférométrique à fibre optique, dit aussi gyrofibre (et en anglais, Interferometric Fiber-Optic Gyroscope, ou I-FOG, ou aussi simplement FOG, ou bien enfin fiber gyro) comporte les éléments suivants :
- une source lumineuse à spectre large émettant une onde lumineuse source ;
- un routeur optique qui envoie une partie de l'onde lumineuse source dans la porte d'entrée-sortie commune de l'interféromètre en anneau (appelé aussi interféromètre de Sagnac, et ring interferometer en anglais) et qui dirige une partie de l'onde retour de l'interféromètre sur un détecteur ; cette partie de l'onde retour sera appelée l'onde de sortie du système ; ce routeur peut en particulier être un coupleur 50-50 (dit aussi 3dB), une jonction en Y ou un circulateur ;
- un polariseur sur cette porte d'entrée-sortie commune, qui sélectionne le même état de polarisation pour l'onde d'entrée et pour l'onde retour de l'interféromètre en anneau ;
- un séparateur-recombineur de faisceau qui sépare les ondes qui vont, ensuite, se propager en sens opposé dans la bobine de fibre, puis interférer après recombinaison ; cette bobine crée la dépendance à la vitesse de rotation Ω par effet Sagnac-Laue, et la fibre utilisée est préférentiellement une fibre à conservation de polarisation (PM pour polarization maintaining en anglais) ; et
- un modulateur de phase placé à une extrémité de la bobine.

La source lumineuse à spectre large est préférentiellement une source d'émission spontanée, amplifiée par émission stimulée (en anglais, *Amplified Spontaneous Emission,* ou *ASE*)*.* Le *terme ASE* est le terme le plus utilisé aujourd'hui pour un tel type de source, mais existent aussi le terme superluminescent (cas des diodes superluminescentes à semi-conducteur, et en anglais Superluminescent Diode ou SLD) et le terme superfluorescent (cas des sources à fibre dopée terre rare, et en anglais Superfluorescent Fiber Sources ou SFS). La terre rare préférentiellement utilisée est l'erbium, de symbole chimique Er, qui émet dans la fenêtre de longueur d'onde 1525 nm-1565nm. En effet, c'est la technologie utilisée en télécommunications optiques avec les amplificateurs à fibre dopée erbium (erbium-doped fiber amplifier, d'abréviation EDFA, en anglais).

L'ensemble polariseur, séparateur-recombineur et modulateur, est préférentiellement réalisé avec un circuit multi-fonction en optique intégrée (multi-function integrated-optic circuit, ou MIOC en anglais) sur substrat électro-optique de niobate de lithium (LiNbO₃) et les guides sont fabriqués par échange protonique recuit (annealed proton exchange, d'abréviation APE en anglais). Plutôt qu'un seul modulateur de phase, il y a une paire de modulateurs, connectés en push-pull, sur les 2 branches de la jonction en Y qui remplit la fonction de séparateur-recombineur.

Le gyromètre comprend également :
- le détecteur qui reçoit du routeur l'onde de sortie du système et la transforme en signal électrique analogique de mesure ;
- un convertisseur analogique-numérique qui transforme ce signal électrique analogique en signal numérique de mesure, ce signal électrique analogique ayant été préalablement amplifié, mais aussi filtré en fréquence, pour respecter le critère de Shannon de cet échantillonnage numérique ;
- une unité de traitement numérique du signal qui analyse ce signal numérique pour en extraire le paramètre à mesurer, donc la vitesse de rotation Ω de la bobine dans le cas d'un gyromètre, et qui fournit la tension de contrôle du modulateur de phase via un convertisseur numérique-analogique et un amplificateur analogique.

L'utilisation d'une source lumineuse amplifiée par émission stimulée (donc source dite *ASE* pour *Amplified Spontaneous Emission*) dans un tel système de mesure présente de nombreux avantages.

Tout d'abord, une telle source lumineuse génère directement la lumière dans un guide monomode ce qui permet un couplage efficace de l'onde lumineuse source avec les différents composants qui comportent des fibres ou des guides monomodes. On dit qu'une telle source ASE a une *grande cohérence spatiale.*

A l'inverse, de par son spectre large, une telle source présente une *faible cohérence temporelle,* ce qui permet de limiter, dans le système, un grand nombre de phénomènes parasites liés à la cohérence : effet de la rétrodiffusion et des rétro-réflexions, effet de l'insuffisance de réjection du polariseur, effet Kerr non linéaire.

Cependant, une source lumineuse d'émission spontanée amplifiée par émission stimulée, donc une source ASE, émet une onde dont la puissance lumineuse est sujette à différentes sources de bruit.

Est connu tout d'abord le bruit photonique qui est un *bruit de grenaille* ( *shot noise* en anglais) et qui représente le bruit *minimal fondamental,* pour tout type d'onde lumineuse. Le bruit photonique est un bruit blanc présentant une densité de puissance de bruit directement reliée à la puissance lumineuse de l'onde.

Plus précisément, le bruit photonique présente une densité de puissance de bruit (en anglais Power Spectral Density ou PSD) proportionnelle, *en absolu,* à la puissance lumineuse, et donc proportionnelle, *en relatif,* à l'inverse de cette puissance lumineuse.

Par exemple, un signal lumineux de 30 microwatt (µW) de puissance, à une longueur d'onde de 1550 nm, présente une densité de puissance PSDₚₕ de bruit photonique *relatif :* ${PSD}_{ph} \left(30μW\right) = {10}^{- 14} / Hz , soit encore - 140 décibels / Hz \left(-140 dB/Hz\right) .$

Est aussi utilisé l'écart-type Bₚₕ de bruit photonique relatif, qui est la racine carrée de la densité de puissance de bruit photonique relatif PSDₚₕ, et donc, dans le cas considéré de 30 µW : ${B}_{ph} \left(30μW\right) = {{PSD}_{ph}}^{1 / 2} = {10}^{- 7} / {Hz}^{1 / 2}$

Pour un signal lumineux de puissance lumineuse de 300 µW, donc dix fois supérieure, la densité de puissance de bruit photonique relatif devient : ${PSD}_{ph} \left(300μW\right) = {10}^{- 15} / Hz , soit - 150 dB / Hz$ soit -10 dB/Hz, et donc un facteur 10 en dessous, par rapport au cas des 30 µW.

C'est par contre seulement un facteur racine carrée de 10 (10^{1/2} ≈ 3) en dessous, pour l'écart-type Bₚₕ du bruit photonique relatif : ${B}_{ph} \left(300μW\right) = {{PSD}_{ph}}^{1 / 2} \approx 0,3 \times {10}^{- 7} / {Hz}^{1 / 2}$

L'onde lumineuse émise par une source à spectre large présente par ailleurs un bruit d'intensité, c'est-à-dire des fluctuations de la puissance lumineuse, s'ajoutant au bruit photonique. Ce bruit d'intensité est plus précisément appelé bruit d'intensité relative en excès (*excess Relative Intensity Noise,* en anglais, ou *excess RIN* ou simplement *RIN*). Ce bruit en excès, s'ajoutant au bruit photonique, sera par la suite désigné ici simplement comme le bruit d'intensité, ou bien le RIN, qui affecte l'onde lumineuse.

Ce bruit d'intensité (ou RIN) est aussi un bruit blanc pour les fréquences assez basses utilisées en pratique dans le traitement du signal du gyrofibre (quelques MHz au plus). En effet, on peut considérer que le RIN est un bruit blanc pour les fréquences inférieures au dixième de la pleine largeur à mi-hauteur (en anglais, *Full Width at Half Maximum* avec, comme abréviation, *FWHM*) du spectre en fréquence optique de l'onde, soit 100 à 300 gigahertz (GHz) pour une FWHM-f en fréquence de 1 à 3 térahertz (THz), ce qui correspond, en longueur d'onde, à une FWHM-λ de 7 à 20 nm autour de 1550 nm.

Le bruit d'intensité (ou RIN), qui affecte une onde lumineuse à spectre large, présente donc aux basses fréquences une densité de puissance de bruit *relatif,* PSD_{RIN}, constante en fonction de la fréquence, et approximativement égale à l'inverse de la pleine largeur à mi-hauteur du spectre en fréquence optique (FWHM-f) ; c'est-à-dire : ${PSD}_{RIN} \approx 1 / FWHM - f .$

Cette loi en 1/ FWHM-f vient du fait que le bruit d'intensité (ou RIN) est dû aux battements aléatoires entre l'ensemble des différentes composantes fréquentielles du spectre large continu de l'onde lumineuse, ces composantes de fréquences différentes interférant entre elles avec des phases aléatoires. Ce bruit est le résultat d'une loi d'autocorrélation, et sa densité de puissance de bruit PSD_{RIN}(f) commence à la fréquence nulle, puis décroit et présente une largeur à mi-hauteur sensiblement égale à celle du spectre optique de la source lumineuse, ce spectre optique étant lui en revanche centré autour d'une fréquence très haute : environ 200 THz, pour une longueur d'onde de 1550 nm.

Ainsi, le même signal lumineux de 30 µW de puissance lumineuse qui présenterait une pleine largeur à mi-hauteur, FWHM-λ, de 7,5 nm autour de 1550 nm en longueur d'onde, soit en fréquence optique, une FWHM-f de 1THz, donc de 10¹²Hz, autour de 200 THz, aurait, à basse fréquence, une densité constante de puissance de bruit d'intensité *relative,* donc de RIN, PSD_{RIN} : ${PSD}_{RIN} \left(7,5 nm\right) \approx 1 / \left({10}^{12}Hz\right) = {10}^{- 12} / Hz , soit - 120 dB / Hz$ ce qui est donc 20 dB/Hz au-dessus de la densité de puissance de bruit photonique *relatif,* PSDₚₕ de -140 dB/Hz. En écart-type de bruit, B_{RIN}, ce sera un facteur 10 au dessus : ${B}_{RIN} \left(7,5 nm\right) = {{PSD}_{RIN}}^{1 / 2} \approx {10}^{- 6} / {Hz}^{1 / 2}$ quand : ${B}_{ph} \left(30μW\right) = {{PSD}_{ph}}^{1 / 2} = {10}^{- 7} / {Hz}^{1 / 2} .$

En écart-type, le bruit d'intensité *relative* est *indépendant* de la puissance optique, mais par contre, le bruit d'intensité *absolue* est *proportionnel* à cette puissance optique. En densité de puissance de bruit, donc en carré de l'écart-type, il est toujours *indépendant* de la puissance optique, *en relatif,* mais par contre, il est *proportionnel au carré* de la puissance optique *en absolu.*

Pour une puissance de 300 µW, donc 10 fois supérieure aux 30 µW de l'exemple précédent, la densité de puissance de bruit d'intensité *relative* reste PSD_{RIN}= 10⁻¹²/Hz, soit -120 dB/Hz, et elle sera un facteur 1000 au dessus de celle du bruit photonique *relatif,* et un facteur racine carrée de 1000, donc environ 30, en écart-type.

Le bruit d'intensité (ou RIN) affectant une onde lumineuse à spectre large produite par émission spontanée amplifiée par émission stimulée (ASE), est la source prépondérante de bruit dans un gyrofibre, *mais il est possible de le compenser.* En effet, une fois généré de façon *aléatoire* par la source, le bruit d'intensité (RIN) se comporte ensuite comme une modulation d'intensité *déterministe* habituelle:
- ce bruit d'intensité reste identique, *en relatif,* quand on divise l'onde lumineuse en plusieurs parties,
- et les fluctuations de puissance liées à ce bruit d'intensité se propagent *sans déformation* dans une fibre optique, pour les fréquences inférieures à la bande passante de cette fibre, ce qui est le cas en pratique dans un gyrofibre. En effet, comme nous l'avons déjà vu, le traitement du signal fonctionne à des fréquences assez basses (quelques mégahertz au plus) quand la bande passante sur plusieurs kilomètres de la fibre monomode utilisée est de plusieurs centaines de gigahertz.

A partir d'une onde source W_{S}, présentant une puissance, appelée ici puissance lumineuse source, P_{S} on peut donc prélever une onde de référence W_{REF} qui a une puissance lumineuse, dite de référence, P_{REF},= a_{REF} . P_{S} , où a_{REF} est le coefficient de prélèvement de la référence sur la source. La puissance P_{S}(t) de la source peut s'exprimer à partir d'une puissance *idéale* sans RIN, P_{S-ID}, et d'un coefficient multiplicatif M_{RIN}(t) représentant les fluctuations temporelles *relatives* qui sont dues au RIN qui est un bruit *relatif.* Ces fluctuations se comportent, comme nous venons de le voir, comme une modulation d'intensité *déterministe,* et donc : ${P}_{S} \left(t\right) = {P}_{S - ID} \left(1+{M}_{RIN}\left(t\right)\right) .$

La puissance de référence P_{REF} va suivre les *mêmes* fluctuations temporelles *relatives* M_{RIN}(t), avec : ${P}_{REF} \left(t\right) = {a}_{REF} . {P}_{S - ID} \left(1+{M}_{RIN}\left(t\right)\right) .$

Maintenant, l'onde de sortie W_{OUT}, de puissance P_{OUT} , est elle aussi porteuse de ces mêmes fluctuations temporelles *relatives* M_{RIN}(t), dues au RIN, mais avec un retard temporel τ lié à la propagation dans le système interférométrique, donc : ${P}_{OUT} \left(t\right) = {P}_{OUT-ID} \left(1+{M}_{RIN}\left(t-τ\right)\right) .$

La puissance *idéale* (donc sans RIN) de sortie, P_{OUT-ID} , est liée à la puissance *idéale* (donc sans RIN) de la source, P_{S-ID}, par un coefficient d'atténuation a_{OUT} qui dépend de l'atténuation des différents composants du système de mesure, ainsi que par la réponse de l'interféromètre en anneau à une différence de phase ΔΦ : ${P}_{OUT-ID} = {a}_{OUT} . \left(1+cosΔΦ\right) . {P}_{S-ID}$

Cette différence de phase ΔΦ est la somme :
- d'une différence de phase ΔΦ_{Ω} entre les deux ondes contra-propagatives se propageant dans l'interféromètre, générée par le paramètre à mesurer, et
- d'une différence de phase ΔΦₘ entre ces deux ondes, modulée périodiquement, appliquée par le modulateur de phase.

La puissance de sortie, P_{OUT}, est convertie en un signal électrique analogique S_{OUT}, avec un premier détecteur et une première chaine électronique ayant un gain de conversion optique-électrique g_{OUT}- La puissance de référence, P_{REF}, est quand à elle convertie en un signal électrique analogique S_{REF} avec un deuxième détecteur et une deuxième chaine électronique, ayant un gain de conversion optique-électrique g_{REF}.

Sont donc obtenus :
- un signal électrique analogique de référence S_{REF}(t), proportionnel à la puissance de la source P_{S}(t), et donc entaché des variations *relatives* M_{RIN} liées au bruit d'intensité de la source : S_{REF}(t) = g_{REF} · a_{REF} · P_{S-ID} . (1+ M_{RIN}(t)) ;
- ainsi qu'un signal électrique analogique de mesure S_{OUT}(t), dépendant du paramètre à mesurer Ω, et entaché des mêmes variations *relatives* M_{RIN}, liées au bruit d'intensité de la source, mais retardées du temps de propagation τ dans le système interférométrique : S_{OUT}(t) = g_{OUT ·} 3_{OUT} .(1 + cos ΔΦ) . P_{S-ID} . (1+ M_{RIN}(t-τ)) .

Il est donc possible de compenser l'effet du RIN, entachant le signal de mesure S_{OUT}(t), en soustrayant le signal de référence S_{REF}(t), après l'avoir multiplié par un coefficient de pondération β qui équilibre les deux chaines de conversion optique-électrique, ainsi qu'après avoir compensé le retard τ dans l'interféromètre. Ce coefficient de pondération β équilibre, *en absolu,* le bruit d'intensité sur le signal de mesure et celui sur le signal de référence (qui sont les mêmes, *en relatif*). On obtient un signal de sortie compensé S_{OUT-COMP}(t) : ${S}_{OUT-COMP} \left(t\right) = {S}_{OUT} \left(t\right) - β . {S}_{REF} \left(t-τ\right) .$

La compensation du retard τ, c'est-à-dire la resynchronisation du signal de référence avec le signal de mesure, peut-être réalisée avec une ligne à retard optique, comme il est proposé dans le document USP 5,331,404 ou dans le document WO 2015/128588 A1, ou bien avec un retard électronique analogique ou numérique, comme il est proposé dans le document USP 6,370,289.

Plusieurs points importants doivent être soulignés.

Tout d'abord, une source ASE *non-polarisée* (*unpolarized* en anglais), utilisée préférentiellement dans un gyrofibre, est porteuse de RIN, mais si on sélectionne un état de polarisation, son RIN associé est complètement décorrélé de celui de l'état de polarisation orthogonal. Il faut donc choisir, pour la référence, le *même* état de polarisation que celui utilisé dans l'interféromètre, comme il est expliqué dans le document USP 5,331,404.

Par ailleurs, il est préférable de choisir une puissance de référence P_{REF} supérieure à au moins 4 fois la puissance de sortie P_{OUT}, afin que le bruit photonique *relatif* de cette puissance de référence P_{REF} soit au moins 2 fois inférieur à celui de l'onde de sortie, et ait donc un effet négligeable dans la compensation de RIN. Le système de mesure ne sera alors limité que par le bruit photonique théorique de la puissance de sortie P_{OUT}.

Ensuite, comme le bruit d'intensité est lié aux battements aléatoires des différentes composantes spectrales du spectre, il est modifié si le spectre est modifié entre l'entrée et la sortie de l'interféromètre. C'est le cas quand est utilisée dans la bobine une fibre monomode classique et un dépolariseur qui génère un spectre cannelé ; par contre, avec une fibre à conservation de polarisation (PM), le spectre est bien conservé et la corrélation entre le RIN de la référence prélevée en entrée, et le RIN du signal de sortie est très bonne.

On connaît du document USP 6,370,289 un gyrofibre tel que décrit ci-dessus, dans lequel l'unité de traitement électronique du signal traite les signaux de mesure S_{OUT} et de référence S_{REF}, pour compenser le bruit du signal de mesure S_{OUT} causé par le bruit d'intensité *relative* de l'onde lumineuse source, avec le bruit du signal de référence S_{REF} causé par *le même* bruit d'intensité *relative* de l'onde lumineuse source, de sorte que le bruit de la mesure compensée du paramètre est réduit.

Le document USP 6,370,289 prévoit plus précisément :
- d'équilibrer l'amplitude du signal de mesure S_{OUT} et l'amplitude du signal de référence S_{REF}, de façon à égaliser la puissance de bruit présentée par chacun de ces deux signaux dans un *domaine spectral* où il n'y a pas de sensibilité au paramètre à mesurer, puis de
- soustraire le signal de référence du signal de mesure.

Selon ce document USP 6,370,289, cette méthode requiert toutefois d'effectuer la transformation de Fourier du signal de mesure et du signal de référence, ce qui amène une complexité importante.

Il est à noter aussi que le document USP 6,370,289, de même que le document USP 5,331,404 , décrivent implicitement une modulation de phase ΔΦₘ(t) sinusoïdale pour la mise au biais de la réponse de l'interféromètre en anneau. Comme il est connu, la puissance de sortie P_{OUT} de l'interféromètre est alors modulée aux différentes harmoniques de la fréquence modulation fₘ, et il faut donc compenser cet effet en multipliant le signal de référence S_{REF} par ces différentes harmoniques avant d'effectuer la différence pondérée entre signal de mesure et signal de référence.

### OBJET DE L'INVENTION

Dans ce contexte, la présente invention propose un système de mesure dans lequel l'influence du bruit d'intensité de l'onde lumineuse source, sur la mesure du paramètre physique à mesurer, est compensée efficacement, voire éliminée totalement, par un asservissement, à une valeur optimale, du coefficient de pondération (β) intervenant dans cette compensation. Cet asservissement permet notamment de compenser les évolutions à long terme ou en température du ratio entre les amplitudes des signaux de mesure et de référence.

Plus précisément, l'invention propose un système de mesure d'un paramètre comportant :
- une source lumineuse d'émission spontanée amplifiée par émission stimulée, émettant une onde lumineuse source présentant une puissance lumineuse source (P_{S}) qui est affectée par un bruit d'intensité relative en excès,
- un routeur optique configuré pour :
   - prélever une onde lumineuse d'entrée à partir de ladite onde lumineuse source, cette onde lumineuse d'entrée étant dirigée vers un interféromètre en anneau de Sagnac comportant un polariseur, un séparateur-recombineur, un modulateur de phase et une bobine de fibre à conservation de polarisation, l'interféromètre recevant, en entrée, ladite onde lumineuse d'entrée dont l'état de polarisation est sélectionné par le polariseur, et produisant en sortie une onde lumineuse retour selon le même état de polarisation que l'onde lumineuse d'entrée, l'onde lumineuse retour présentant une puissance lumineuse retour (P_{BACK}) fonction du paramètre à mesurer et fonction d'une différence de phase ΔΦₘ entre deux ondes contra-propagatives se propageant dans l'interféromètre introduite par le modulateur de phase,
   - prélever, à partir de ladite onde lumineuse retour, une onde lumineuse de sortie, cette onde lumineuse de sortie étant dirigée vers un premier détecteur de rayonnement optique qui délivre un signal électrique analogique de mesure représentatif d'une puissance de sortie (P_{OUT}) présentée par l'onde lumineuse de sortie, et pour
   - prélever une onde lumineuse de référence à partir de ladite onde lumineuse source, cette onde lumineuse de référence présentant le même état de polarisation que l'onde lumineuse d'entrée et que l'onde lumineuse retour, et étant dirigée vers un deuxième détecteur de rayonnement optique qui délivre un signal électrique analogique de référence représentatif d'une puissance de référence (P_{REF}) présentée par l'onde lumineuse de référence, le système de mesure étant configuré pour échantillonner et numériser le signal électrique analogique de mesure et, respectivement, le signal électrique analogique de référence et obtenir un signal de mesure numérisé et, respectivement, un signal de référence numérisé et
- une unité de traitement numérique du signal adaptée à traiter les signaux de mesure numérisé et de référence numérisé pour fournir une mesure dudit paramètre à partir d'un signal de mesure compensé (D_{Ω-COMP}) qui est déterminé en calculant une différence pondérée entre :
   - un premier signal fonction du signal de mesure numérisé, et
   - un deuxième signal fonction du signal de référence numérisé, le signal de référence étant resynchronisé avec le signal de mesure, et ce deuxième signal étant affecté d'un coefficient de pondération (β).

Selon l'invention, l'unité de traitement numérique du signal est adaptée :
- à commander le modulateur de phase pour moduler la différence de phase ΔΦₘ selon une modulation périodique carrée multi-états,
- à déterminer le signal de mesure compensé (D_{Ω-COMP}) en appliquant en outre un premier code séquentiel de démodulation numérique (CSDN-Ω), sensible audit paramètre à mesurer,
- à déterminer un signal compensé supplémentaire (D_{RIN-COMP}) :
   - en calculant une différence pondérée entre un premier signal supplémentaire, fonction du signal de mesure, et un deuxième signal supplémentaire, fonction du signal de référence, le signal de référence étant resynchronisé avec le signal de mesure, et ce deuxième signal supplémentaire étant affecté du même coefficient de pondération (β) que le deuxième signal,
   - et en appliquant un code séquentiel de démodulation numérique (CSDN-RIN) supplémentaire, insensible audit paramètre à mesurer,
- et à asservir ledit coefficient de pondération (β) à la valeur optimale (β_{ορt}) qui minimise ou rend inférieure à un seuil donné l'écart statistique σ_{RIN} de ce signal compensé supplémentaire (D_{RIN-COMP}).

L'unité de traitement numérique du signal est adaptée à utiliser cette valeur optimale (βₒₚₜ) du coefficient de pondération pour déterminer le signal de mesure compensé (D_{Ω-COMP}).

Le signal de mesure compensé (D_{Ω-COMP}), ainsi que le signal compensé supplémentaire (D_{RIN-COMP}), peuvent être déterminés en appliquant le code séquentiel de démodulation numérique correspondant, soit avant, soit après avoir effectué ladite différence pondérée.

Dans la suite, l'invention est présentée dans le cas, non limitatif, où les codes séquentiels de démodulation numérique sont appliqués avant d'effectuer lesdites différences pondérées.

Ainsi, dans la suite, nous considèrerons le cas :
- dans lequel le premier code séquentiel de démodulation numérique (CSDN-Ω) est appliqué respectivement au signal de mesure et au signal de référence pour produire les premier et deuxième signaux, dont la différence pondérée est ensuite calculée (pour obtenir le signal de mesure compensé D_{Ω-COMP}),
- et dans lequel le code séquentiel de démodulation numérique supplémentaire (CSDN-RIN) est appliqué respectivement au signal de mesure et au signal de référence, pour produire les premier et deuxième signaux supplémentaires, dont la différence pondérée est ensuite calculée (pour obtenir le signal compensé supplémentaire D_{RIN-COMP}).

Dans la suite :
- les premier et deuxième signaux sont désignés respectivement comme le signal de mesure démodulé (D_{Ω-OUT}), et comme le signal de référence démodulé (D_{Ω-REF}) ; et
- les premier et deuxième signaux supplémentaires sont désignés respectivement comme le signal de mesure démodulé (D_{RIN-OUT}) supplémentaire, et comme le signal de référence démodulé (D_{RIN-REF}) supplémentaire, sensibles uniquement au bruit relatif d'intensité en excès.

Comme le code séquentiel de démodulation numérique supplémentaire (CSDN-RIN) est insensible au paramètre à mesurer, le signal de mesure démodulé (D_{RIN-OUT}) et le signal de référence démodulé (D_{RIN-REF}) supplémentaires ne dépendent pas de la valeur de ce paramètre. L'asservissement du coefficient de pondération (β) à sa valeur optimale (βₒₚₜ) est ainsi réalisé sans être perturbé par le paramètre à mesurer, en particulier sans être perturbé par des variations éventuelles de ce paramètre.

Il est rappelé par ailleurs que le bruit d'intensité relative en excès, également appelé RIN, est un *bruit blanc* aux fréquences utilisées. En outre, dans le système de mesure selon l'invention, le signal de mesure compensé (D_{Ω-COMP}(t)) et le signal compensé supplémentaire (D_{RIN-COMP}(t)) proviennent de *la même chaine* de détection-amplification-filtrage-numérisation de la puissance de sortie (P_{OUT}) ainsi que de *la même chaine* de détection-amplification-filtrage-numérisation de la puissance de référence (P_{REF}). La valeur optimale (βₒₚₜ) du coefficient de pondération, déterminée pour minimiser l'écart statistique σ_{RIN} du signal compensé supplémentaire (D_{RIN-COMP}(t)) (ou pour le rendre inférieure à un seuil donné), *est donc aussi* la valeur qui minimise, pour le signal de mesure compensé (D_{Ω-COMP}(t) ), l'amplitude des fluctuations causées par le RIN (ou qui permet de les rendre inférieures à un seuil donné).

D'autre part, la différence de phase ΔΦₘ est modulée ici selon une modulation périodique carrée multi-états, c'est-à-dire qu'elle est, au cours du temps, constante par morceaux, et, bien sûr, périodique.

Une telle modulation périodique carrée multi-états peut par exemple être une modulation carrée à deux états (2-state square-wave modulation en anglais), ou une modulation carrée dite « 4-états » (4-state modulation en anglais), comme décrit dans H.C.Lefèvre, The Fiber-Optic Gyroscope, 2nd édition, Artech House, 2014, pages 136-139. Il peut aussi s'agir de la modulation, dite « 2k+1», décrite dans le document USP 9,291,458.

Le fait que la différence de phase ΔΦₘ ainsi modulée soit constante par morceaux permet d'utiliser, pour démoduler les signaux de mesure et de référence, des codes séquentiels de démodulation numérique (CSDN-Ω et CSDN-RIN) particulièrement simples, ne nécessitant qu'une puissance de calcul limitée.

La technique mise en œuvre dans le système de mesure selon l'invention, basée sur des codes séquentiels de démodulation numérique, adaptés spécifiquement à la modulation de phase carré multi-états utilisée, est ainsi d'une grande simplicité par rapport à l'approche proposée dans le document USP 6,370,289 qui requiert la complexité d'une analyse spectrale par transformée de Fourier.

En outre, l'utilisation d'une modulation de phase carrée multi-états pour la mise au biais de l'interféromètre permet de s'affranchir de la multiplication supplémentaire du signal de référence par le signal de mesure, mentionnée précédemment dans la partie relative à l'arrière-plan technologique. En effet, la puissance de sortie est dans ce cas constituée de plateaux constants pour les différents états de la modulation carrée. Il y a des pics de transition entre ces plateaux, mais ces pics sont éliminés par un commutateur rapide. Ces plateaux constants peuvent avoir des niveaux différents, en rotation, dans le cas de la boucle ouverte, mais par contre, en boucle fermée, en particulier lorsqu'une rampe de phase numérique est utilisée, ces plateaux ont le même niveau de puissance.

Pour résumer, dans le système de mesure selon l'invention, la compensation du RIN affectant l'onde lumineuse source est donc réalisée de manière à la fois plus précise, plus fiable, et plus simple que dans l'art antérieur précité.

En outre, le fait d'asservir le coefficient de pondération (β) à sa valeur optimale (β_{οpt}) permet de rester toujours à l'optimum de compensation malgré des évolutions de l'atténuation dans l'interféromètre, causées par des variations en température ou par une évolution à long terme.

On peut également prévoir, dans le système de mesure, que
- la puissance de sortie (P_{OUT}) présentée par l'onde lumineuse de sortie dépend en outre d'un paramètre additionnel (V_{π}), que
- l'unité de traitement numérique du signal est adaptée en outre à déterminer ledit paramètre additionnel (V_{π}), à partir d'un deuxième signal de mesure démodulé (D_{Vπ-OUT}) produit en appliquant au signal de mesure un deuxième code séquentiel de démodulation numérique (CSDN-V_{π}), insensible au paramètre à mesurer (Ω) et sensible audit paramètre additionnel (V_{π}), et que
- le code séquentiel de démodulation numérique supplémentaire (CSDN-RIN) est en outre insensible audit paramètre additionnel (V_{π}).

On peut prévoir aussi que :
- l'unité de traitement numérique du signal est adaptée plus précisément à moduler la différence de phase ΔΦₘ selon une modulation dite « 4-états » pour laquelle la différence de phase ΔΦₘ présente successivement, au cours de chaque période de modulation, quatre valeurs constantes ΔΦ_{b1} = π - α , ΔΦ_{b2} = π + α , ΔΦ_{b3} = - π + α et ΔΦ_{b4} = - π - α, α étant un déphasage inférieur à π/2, que
- l'application du premier code séquentiel de démodulation numérique (CSDN-Ω) à un signal à traiter consiste à sommer quatre valeurs x₁, x₂, x₃, x₄ présentées par ce signal en réponse respectivement à chacune des quatre valeurs de différence de phase ΔΦ_{b1}, ΔΦ_{b2}, ΔΦ_{b3}, ΔΦ_{b4}, les quatre valeurs x₁, x₂, x₃, x₄ ayant été multipliées, préalablement à cette sommation, respectivement par -1, +1, +1, -1, ou, respectivement, par +1, -1, -1, +1, et que
- l'application du deuxième code séquentiel de démodulation numérique (CSDN-V_{π}) au signal à traiter consiste à sommer les quatre valeurs x₁, x₂, x₃, x₄ en les ayant préalablement multipliées respectivement par -1, +1, -1, +1, ou, respectivement, par +1, -1, +1, -1.

On peut prévoir en particulier que le déphasage α intervenant dans cette modulation 4-états est compris entre π/64 et π/2.

Le signal à traiter correspond ici au signal de mesure (S_{OUT}), ou au signal de référence (S_{REF}).

On peut prévoir en particulier que, après amplification et aussi après un filtrage analogique respectant le critère de Shannon, le signal de mesure (S_{OUT}(t)) et le signal de référence (S_{REF}(t)) sont échantillonnés numériquement à chacun des quatre états de la modulation susmentionnés, pour donner respectivement :
- un signal numérique S_{N-OUT}(t) qui prend quatre valeurs numériques S_{N-OUT-n} (avec n= 1 à 4), pour chacun de ces quatre états de la modulation, et
- un signal numérique S_{N-REF}(t) qui prend quatre valeurs numériques S_{N-REF-n} (avec n= 1 à 4), pour chacun de ces quatre états de la modulation.

Pour le signal de mesure (S_{OUT}(t)), les quatre valeurs x₁, x₂, x₃, x₄ correspondent alors aux quatre valeurs S_{N-OUT-1}, S_{N-OUT-2}, S_{N-OUT-3}, S_{N-OUT-4}, tandis que pour le signal de référence (S_{REF}(t)), les quatre valeurs x₁, x₂, x₃, x₄ correspondent aux quatre valeurs S_{N-REF-1}, S_{N-REF-2}, S_{N-REF-3}, S_{N-REF-4}.

Les signaux de mesure et de référence démodulés D_{Ω-OUT}(t) et D_{Ω-REF}(t), obtenus en appliquant le premier code séquentiel de démodulation numérique CSDN-Ω, - + + - , sont alors déterminés conformément aux formules suivantes : ${D}_{Ω - OUT} \left(t\right) = CSDN - Ω \left({S}_{N - OUT}\left(t\right)\right) = - {S}_{N - OUT - 1} + {S}_{N - OUT - 2} + {S}_{N - OUT - 3} - {S}_{N - OUT - 4}$ et D_{Ω-REF}(t) = CSDN-Ω(S_{N-REF}(t)) = - S_{N-REF-1} + S_{N-REF-2} + S_{N-REF-3} - S_{N-REF-4} (ou, bien sûr, conformément aux formules D_{Ω-OUT}(t) = CSDN-Ω(S_{N-OUT}(t))= + S_{N-OUT-1} - S_{N-OUT-2} - S_{N-OUT-3} + S_{N-OUT-4} et D_{Ω-REF}(t) = CSDN-Ω(S_{N-REF}(t)) = + S_{N-REF-1} - S_{N-REF-2} - S_{N-REF-3} + S_{N-REF-4}).

Les signaux de mesure et de référence démodulés D_{Vπ-OUT}(t) et D_{Vπ-REF}(t), obtenus en appliquant le deuxième code séquentiel de démodulation numérique CSDN-V_{π} , - + - + , sont alors déterminés conformément aux formules suivantes : ${D}_{V π - OUT} \left(t\right) = CSDN - {V}_{π} \left({S}_{N - OUT}\left(t\right)\right) = - {S}_{N - OUT - 1} + {S}_{N - OUT - 2} - {S}_{N - OUT - 3} + {S}_{N - OUT - 4}$ et D_{Vπ-REF}(t) = CSDN-V_{π}(S_{N-REF}(t)) = - S_{N-REF-1} + S_{N-REF-2} - S_{N-REF-3} + S_{N-REF-4} (ou, bien sûr, conformément aux formules D_{Ω-OUT}(t) = CSDN-V_{π}(S_{N-OUT}(t))= + S_{N-OUT-1} - S_{N-OUT-2} + S_{N-OUT-3} - S_{N-OUT-4} et D_{Ω-REF}(t) = CSDN-V_{π}(S_{N-REF}(t)) = + S_{N-REF-1} - S_{N-REF-2} + S_{N-REF-3} - S_{N-REF-4}).

Selon un mode de réalisation envisageable, il est prévu que les deux démodulations réalisées respectivement par le premier code séquentiel de démodulation numérique (CSDN-Ω) et par le code séquentiel de démodulation numérique supplémentaire (CSDN-RIN) sont en quadrature l'une avec l'autre.

On peut prévoir alors, dans le cas particulier de la modulation de phase « 4-états » mentionné ci-dessus, que l'application du code séquentiel de démodulation numérique supplémentaire CSDN-RIN, noté dans ce cas + + - - (ou - - + +), consiste à sommer les quatre valeurs x₁, x₂, x₃, x₄ en les ayant préalablement multipliées respectivement par +1, +1, -1, -1, ou, respectivement, par -1, -1, +1, +1.

Selon un autre mode de réalisation, il est prévu que le code séquentiel de démodulation numérique supplémentaire (CSDN-RIN) est sensible à une composante périodique présentant une fréquence égale à la fréquence de modulation divisée par un nombre pair, en particulier divisée par 2.

Comme le RIN peut être assimilé ici à un bruit blanc, la valeur optimale (βₒₚₜ) du coefficient de pondération (β) est la même à la fréquence de modulation qu'à d'autres fréquences. Le code séquentiel de démodulation numérique supplémentaire (CSDN-RIN), sensible à une composante de fréquence différente de la fréquence de modulation, est donc avantageusement insensible au paramètre à mesurer, tout en permettant d'asservir le coefficient de pondération (β) à une valeur qui correspond effectivement à la valeur permettant de compenser, de manière optimale, le RIN à la fréquence de modulation.

On peut prévoir en particulier, dans ce cas, pour la modulation de phase « 4-états » mentionné ci-dessus, que l'application du code séquentiel de démodulation numérique supplémentaire CSDN-RIN, noté alors + + + + - - - - (ou - - - - + + + +), consiste à sommer les quatre valeurs x₁, x₂, x₃, x₄ présentées par le signal à traiter sur une période de modulation, et à leur soustraire la somme des quatre valeurs x₁, x₂, x₃, x₄ présentées par le signal à traiter sur la période de modulation suivante. La séquence de démodulation utilisée, + + + + - - - - (ou - - - - + + + +) s'étend ainsi sur 8 états successifs et donc 2 périodes de la modulation 4-états.

Dans le cas de la modulation « 4-états » décrite ci-dessus, on constate que les séquences de démodulation numérique n'impliquent que des additions ou des soustractions. Le calcul des signaux démodulés, au moyen de ces séquences de démodulation numérique, est donc rapide à effectuer, et n'introduit pas d'erreur de calcul. Il est en même dans d'autres modulations carrées multi-états, telles que la modulation carrée à 2 états ou la modulation « 2k+1 » susmentionnées.

On notera par ailleurs que, de par la commutativité et l'associativité de l'addition et de la soustraction, il est effectivement possible, comme déjà indiqué, de calculer ladite différence pondérée soit avant, soit après application des codes séquentiels de démodulation numérique.

On peut prévoir en outre que l'application du code séquentiel de démodulation numérique supplémentaire (CSDN-RIN) à un signal consiste à appliquer à ce signal au moins une opération mathématique (par exemple l'une des opérations ++-- ou ++++---- décrite ci-dessus), à l'exception d'une transformation de Fourier.

Le signal compensé supplémentaire (D_{RIN-COMP}), obtenu comme cela a été présenté ci-dessus, permet d'asservir le coefficient de pondération (β) à ladite valeur optimale (βₒₚₜ), dont on rappelle qu'elle minimise l'écart statistique σ_{RIN} de ce signal.

Le terme « écart statistique σ_{RIN} » désigne ici l'écart à la valeur moyenne, dû à la dispersion statistique du signal compensé supplémentaire (D_{RIN-COMP}), et donc représentatif de l'amplitude de fluctuations de ce signal autour de sa valeur moyenne. L'écart statistique σ_{RIN} du signal compensé supplémentaire (D_{RIN-COMP}) peut ainsi désigner notamment la variance de ce signal, son écart-type, ou encore, par exemple, son moment centré d'ordre quatre. L'écart statistique σ_{RIN} du signal compensé supplémentaire (D_{RIN-COMP}) est toujours positif.

On peut prévoir encore que l'unité de traitement numérique du signal est adaptée à déterminer l'écart statistique σ_{RIN} du signal compensé supplémentaire D_{RIN-COMP} en calculant une moyenne de la valeur absolue de la différence D_{RIN-COMP} -< D_{RIN-COMP} > entre le signal compensé supplémentaire D_{RIN-COMP} et sa valeur moyenne <D_{RIN-COMR}>. Le calcul de cet écart statistique σ_{RIN} basé sur la valeur absolue peut alors être réalisé de manière cumulative, en ne nécessitant que des ressources de calcul limitées.

Dans un mode de réalisation préféré, l'asservissement du coefficient de pondération β à ladite valeur optimale (βₒₚₜ) est réalisé en :
- calculant une différence Δσ_{RIN}(β) entre :
   - une première valeur de l'écart statistique σ_{RIN}(β+δβ) du signal compensé supplémentaire D_{RIN-COMP}, calculée pour une première valeur décalée β+δβ du coefficient de pondération β, et
   - une deuxième valeur de l'écart statistique σ_{RIN}(β-δβ) du signal compensé supplémentaire D_{RIN-COMP}, calculée pour une deuxième valeur décalée β-δβ du coefficient de pondération β, et en
- asservissant le coefficient de pondération β de manière à annuler cette différence Δσ_{RIN}(β). Comme l'écart statistique σ_{RIN}(β) du signal compensé supplémentaire D_{RIN-COMP} est minimal pour ladite valeur optimale βₒₚₜ, la différence Δσ_{RIN}(β) s'annule pour β=βₒₚₜ : $Δ {σ}_{RIN} \left({β}_{opt}\right) = {σ}_{RIN} \left({β}_{opt}+δβ\right) - {σ}_{RIN} \left({β}_{opt}-δβ\right) = 0 .$

Asservir ainsi la différence Δσ_{RIN}(β) à zéro amène donc le coefficient de pondération β à sa valeur optimale βₒₚₜ.

La différence Δσ_{RIN}(β) passe par zéro, en changeant de signe, à la valeur optimale βₒₚₜ, et dépend linéairement de β au voisinage de cette valeur. Elle fournit donc *un signal d'erreur* pour la boucle d'asservissement de compensation de RIN, permettant d'asservir efficacement le coefficient de pondération β à sa valeur optimale βₒₚₜ.

De plus, comme déjà indiqué, la détermination de l'écart statistique σ_{RIN} du signal compensé supplémentaire D_{RIN-COMP} ne nécessite que des ressources de calculs limitées, si bien que cet asservissement peut être mis en œuvre avec de telles ressources.

Ainsi, on notera à nouveau, sur l'exemple de ce mode réalisation, que l'ajustement du coefficient de pondération β grâce auquel une compensation efficace du RIN est obtenue, est réalisé de manière nettement plus simple dans le système de mesure selon l'invention que dans l'art antérieur précité.

Préférentiellement, l'écart 2×δβ entre la première valeur décalée β+δβ, et la deuxième valeur décalée β-δβ du coefficient de pondération β, est compris entre 2% et 20% de la valeur du coefficient de pondération β. La demanderesse a en effet constaté qu'une valeur de l'écart 2×δβ comprise dans cette plage de valeurs conduit à un asservissement performant du coefficient de pondération β.

Selon une autre caractéristique additionnelle et non limitative, le système de mesure selon l'invention est adapté pour appliquer un déphasage de contre-réaction entre les deux ondes contra-propagatives se propageant dans l'interféromètre, au moyen dudit modulateur de phase, en fonction du signal de mesure, de manière à compenser un déphasage non-réciproque entre les deux ondes contra-propagatives dépendant dudit paramètre à mesurer. Le système de mesure est ainsi adapté à mesurer ledit paramètre « en boucle fermée » (« closed loop » en anglais).

La présente invention trouve une application particulièrement avantageuse dans la réalisation d'un gyromètre à fibre optique comportant un système de mesure tel que décrit ci-dessus, destiné à mesurer une composante de la vitesse de rotation du gyromètre, suivant un axe de rotation parallèle à l'axe de la bobine de fibre.

Ainsi, la présente invention concerne également un gyromètre comportant un système de mesure conforme à l'invention, le paramètre physique à mesurer correspondant alors à ladite vitesse de rotation (Ω) du gyromètre.

La présente invention concerne par ailleurs une centrale d'attitude ou de navigation inertielle comportant au moins un tel gyromètre.

L'invention peut également trouver une application dans la réalisation d'un capteur de courant électrique ou de champ magnétique comportant un système de mesure conforme à l'invention, destiné à mesurer une différence de phase produite, dans l'interféromètre en anneau de SAGNAC, par effet FARADAY.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un système de mesure selon un premier mode de réalisation de l'invention ;
- la figure 2 est une vue schématique d'un système de mesure selon un deuxième mode de réalisation de l'invention ;
- chacune des figures 3, 4 et 5 représente schématiquement un signal, mesuré au moyen du système de mesure de la figure 1, ou de la figure 2, ainsi que des signaux obtenus par traitement de ce signal mesuré ;
- la figure 6 est un schéma fonctionnel représentant les principales opérations de traitement du signal mises en œuvre dans le système de mesure de la figure 1, ou de la figure 2, pour déterminer un paramètre à mesurer ;
- la figure 7 représente schématiquement l'écart statistique d'un signal bruité, déterminé dans ce système de mesure, en fonction d'un paramètre de pondération intervenant dans les opérations de traitement du signal de la figure 6 ; et
- la figure 8 est un schéma fonctionnel représentant plus en détail l'une des opérations de traitement du signal de la figure 6.

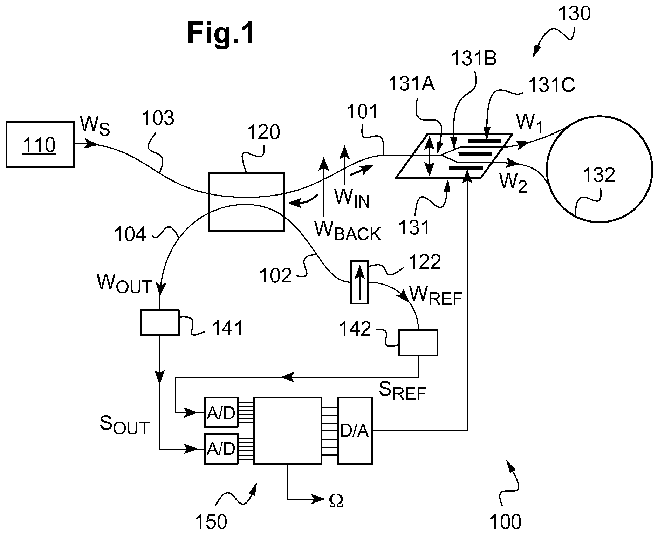

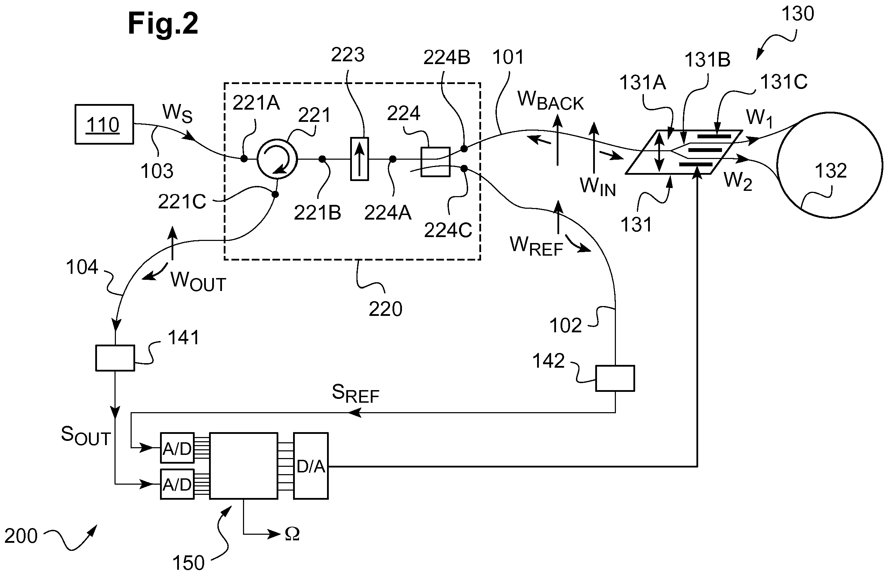

Les figures 1 et 2 représentent schématiquement les principaux éléments d'un système de mesure 100 ; 200 selon un premier et un deuxième mode de réalisation de l'invention. Les éléments identiques ou similaires de ces deux modes de réalisation sont référencés par les mêmes signes de référence et ne seront pas décrits à chaque fois.

Ce système de mesure 100 ; 200 comprend une source lumineuse 110 d'émission spontanée amplifiée par émission stimulée (ou *ASE*)*,* telle que décrite dans la partie relative à l'arrière-plan technologique. Cette source lumineuse 110 émet une onde lumineuse source W_{S}, qui présente une puissance lumineuse source P_{S} affectée par un bruit d'intensité relative en excès, ou RIN, comme expliqué précédemment.

Le système de mesure 100 ; 200 comprend différentes voies 101, 102, 103, 104 de circulation pour la propagation d'ondes lumineuses, ces voies 101, 102, 103, 104 étant formées ici de sections de fibre optique, par exemple des fibres optiques en silice classiquement utilisées en télécommunications optiques.

Afin d'acheminer et d'aiguiller les différentes ondes lumineuses sur ces différentes voies 101, 102, 103, 104, le système 100 ; 200 de mesure comporte un routeur optique 120 ; 220.

La principale différence entre le premier (figure 1) et le deuxième mode de réalisation (figure 2) du système de mesure réside dans le détail de réalisation de ce routeur optique 120 ; 220.

Quel que soit le mode de réalisation, le routeur optique 120 ; 220 est relié optiquement à la source lumineuse 110 (par une voie source 103), de laquelle il reçoit l'onde lumineuse source W_{S}. Le routeur optique 120 ; 220 est configuré pour prélever alors, à partir de l'onde lumineuse source W_{S}, une onde lumineuse de référence W_{REF} et une onde lumineuse d'entrée W_{IN}.

L'onde lumineuse de référence W_{REF} est ensuite dirigée vers un détecteur de rayonnement optique 142 (appelé deuxième détecteur de rayonnement optique), via une voie de référence 102, tandis que l'onde lumineuse d'entrée W_{IN} est dirigée vers le port d'entrée-sortie d'un interféromètre en anneau de Sagnac, via une voie d'interféromètre 101.

Ce deuxième détecteur 142 de rayonnement optique délivre un signal de référence S_{REF}, proportionnel à la puissance lumineuse P_{REF} de l'onde lumineuse de référence W_{REF}.

Le routeur optique 120 ; 220 est également configuré pour recevoir, de la voie d'interféromètre 101, une onde retour W_{BACK} sortant de l'interféromètre 130, et pour prélever à partir de cette onde retour W_{BACK} une onde lumineuse de sortie W_{OUT}.

L'onde lumineuse de sortie W_{OUT} est ensuite dirigée vers un premier détecteur de rayonnement optique 141, via une voie de sortie 104.

Le premier détecteur 141 de rayonnement optique délivre un signal de mesure S_{OUT} proportionnel à la puissance lumineuse de sortie P_{OUT} présentée par l'onde lumineuse de sortie W_{OUT}.

L'interféromètre 130 du système de mesure 100 ; 200 est relié par son port d'entrée-sortie à la voie d'interféromètre 101, de laquelle il reçoit l'onde lumineuse d'entrée W_{IN}.

L'interféromètre 130 comporte, au niveau de son port d'entrée-sortie, un polariseur 131A, suivi d'un séparateur-recombineur 131B. Les deux voies de sortie du séparateur-recombineur 131B sont reliées respectivement aux deux extrémités d'une bobine de fibre 132, cette fibre étant une fibre optique à conservation de polarisation.

L'onde lumineuse d'entrée W_{IN}, dont la polarisation est sélectionnée par le polariseur 131A, est ainsi séparée par le séparateur-recombineur 131B en deux ondes contra-propagatives W₁ et W₂, se propageant en sens opposés dans la bobine de fibre 132.

L'interféromètre 130 comprend en outre un modulateur de phase 131C, placé au niveau de l'une des extrémités de la bobine de fibre 132, adapté à introduire une différence de phase ΔΦₘ entre les deux ondes contra-propagatives W₁ et W₂.

Ici, l'ensemble comprenant le polariseur 131A, le séparateur-recombineur 131B et le modulateur de phase 131C est réalisé au moyen d'un circuit multifonction 131 en optique intégrée, comme décrit précédemment dans la partie relative à l'arrière-plan technologique.

Après propagation dans la bobine de fibre 132, les deux ondes contra-propagatives W₁ et W₂ sont recombinées au niveau du séparateur-recombineur 131B pour produire l'onde lumineuse retour W_{BACK}, qui sort de l'interféromètre 130 par son port d'entrée-sortie.

L'onde lumineuse retour W_{BACK} présente le même état de polarisation que l'onde lumineuse d'entrée W_{IN}, cet état de polarisation étant fixé par le polariseur 131A.

La puissance lumineuse retour P_{BACK} de l'onde lumineuse retour W_{BACK} dépend de la différence de phase ΔΦ totale, entre ces deux ondes W₁ et W₂, lors de leur recombinaison.

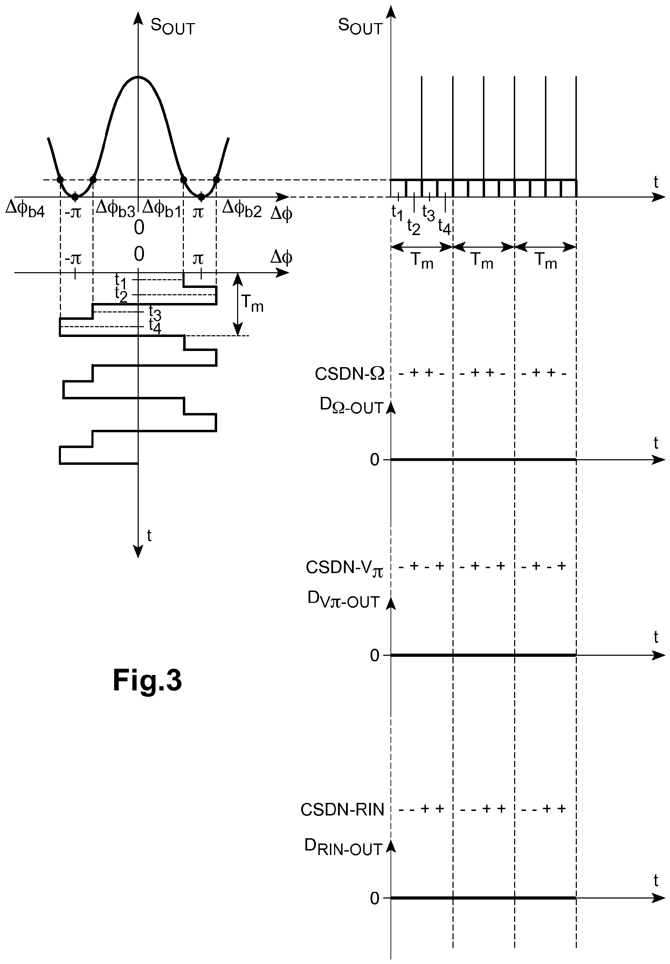

Comme la puissance de sortie P_{OUT} représente une fraction de la puissance lumineuse retour P_{BACK} de l'onde lumineuse retour W_{BACK}, le signal de mesure S_{OUT} dépend, de même que la puissance lumineuse retour P_{BACK}, de la différence de phase ΔΦ totale. Une courbe représentant schématiquement le signal de mesure S_{OUT} en fonction de la différence de phase ΔΦ est tracée sur chacune des figures 3 à 5.

Cette différence de phase ΔΦ est égale à la somme :
- d'une différence de phase ΔΦ_{Ω} générée par le paramètre Ω à mesurer, et
- de la différence de phase ΔΦₘ introduite par le modulateur de phase 131C.

Le signal de mesure, _{SOUT}(ΔΦ), permet ainsi de déterminer la différence de phase ΔΦ_{Ω} , et d'en déduire le paramètre Ω à mesurer.

Ici, le paramètre Ω (physique) à mesurer est la composante Ω de la vitesse de rotation de l'interféromètre 130, suivant un axe de rotation (non représenté) parallèle à l'axe de la bobine de fibre 132 (l'axe de la bobine de fibre est perpendiculaire au plan défini par chaque spire de la bobine).

Dans le premier mode de réalisation du système de mesure 100 selon l'invention (figure 1), le routeur optique 120 est réalisé au moyen d'un coupleur fibré deux par deux à quatre ports, à maintien de polarisation. De préférence, ce coupleur est un coupleur équilibré (50-50) transmettant la même puissance lumineuse sur chacun de ses ports de sortie.

Un polariseur 122 supplémentaire est prévu sur la voie de référence 102, entre le routeur optique 120 et le deuxième détecteur 142. Ce polariseur est disposé de manière à sélectionner, pour l'onde lumineuse de référence W_{REF}, le même état de polarisation que pour l'onde lumineuse d'entrée W_{IN} et pour l'onde lumineuse retour W_{BACK}. Les fibres optiques formant les voies de circulation 101 et 102 sont par ailleurs des fibres optiques à maintien de polarisation.

En variante, le polariseur supplémentaire mentionné ci-dessus pourrait être disposé non pas sur la voie de référence, mais, par exemple, sur la voie source, entre la source et le routeur optique, la voie source étant alors réalisée elle aussi au moyen d'une fibre optique à maintien de polarisation.

Dans le deuxième mode de réalisation (figure 2), le routeur optique 220 comprend un circulateur 221 optique, un coupleur 224 à maintien de polarisation, et un polariseur 223 supplémentaire.

Le circulateur 221 comprend trois ports, connectés comme suit dans le système de mesure :
- un premier port 221A est relié optiquement à la source lumineuse 110,
- un deuxième port 221B est relié optiquement au port d'entrée 224A du coupleur 224, et
- un troisième port 221C est relié optiquement au premier détecteur 141, par l'intermédiaire de la voie de sortie 104.

Un premier port de sortie 224B du coupleur 224 est relié optiquement à l'interféromètre 130, par l'intermédiaire de la voie d'interféromètre 101 tandis qu'un deuxième port de sortie 224C du coupleur 224 est relié optiquement au deuxième détecteur 142, par l'intermédiaire de la voie de référence 102.

Le polariseur 223 supplémentaire est disposé sur le trajet de la lumière, entre le deuxième port 221B du circulateur 221 et le port d'entrée 224A du coupleur. Ce polariseur 223 est disposé de manière à sélectionner un état de polarisation identique à l'état de polarisation de l'onde lumineuse d'entrée W_{IN} et de l'onde lumineuse retour W_{BACK}. Autrement formulé, ce polariseur 223 supplémentaire est orienté de la même manière que le polariseur 131A intégré de l'interféromètre 130.

Dans ce deuxième mode de réalisation, les fibres optiques formant les voies de circulation 101 et 102 sont là encore des fibres optiques à maintien de polarisation, de même que la ou les fibres optiques reliant le polariseur 223 au coupleur 224.

En variante, le polariseur supplémentaire mentionné ci-dessus pourrait être disposé non pas entre le circulateur et le coupleur, mais, par exemple, sur la voie source, entre la source et le circulateur, la voie source étant alors réalisée elle aussi au moyen d'une fibre optique à maintien de polarisation.

Le circulateur 221 reçoit l'onde lumineuse source W_{S} par son premier port 221A, et la transmet au niveau de son deuxième port 221B. Après passage par le polariseur 223 supplémentaire, cette onde lumineuse est séparée par le coupleur 224 entre, d'une part, l'onde lumineuse d'entrée W_{IN}, envoyée vers l'interféromètre 130, et, d'autre part, l'onde lumineuse de référence W_{REF}, envoyée vers le deuxième détecteur 142. Préférentiellement, le taux de séparation du coupleur 224 est de 1% à 5% pour l'onde de référence W_{REF}, et donc respectivement de 99% à 95% pour l'onde d'entrée W_{IN}.

L'onde lumineuse retour W_{BACK}, renvoyée par l'interféromètre 130, entre dans le coupleur par son premier port de sortie 224B, et en sort par son port d'entrée 224A. Elle est donc transmise ensuite au circulateur 221, dans lequel elle entre par le deuxième port 221B, et dont elle sort par le troisième port 221C, pour parvenir ensuite jusqu'au premier détecteur 141.

Par rapport au routeur optique mis en œuvre dans le premier mode de réalisation, le routeur optique 200 de ce deuxième mode de réalisation permet, grâce au circulateur 221 optique, de récupérer dans la voie de sortie 104 une proportion plus grande de la puissance lumineuse retour P_{BACK} sortant de l'interféromètre, améliorant ainsi la précision avec laquelle le paramètre Ω peut être mesuré.

Dans le premier, comme dans le deuxième mode de réalisation, compte tenu de la structure du routeur optique 120 ; 220, l'onde lumineuse de sortie W_{OUT} et l'onde lumineuse de référence W_{REF} présentent le même état de polarisation, qui correspond en l'occurrence à l'état de polarisation des ondes lumineuses d'entrée W_{IN} et retour W_{BACK}, fixé par le polariseur 131A intégré de l'interféromètre 130.

Les signaux de mesure S_{OUT} et de référence S_{REF}, obtenus grâce au dispositif optique qui vient d'être décrit, sont traités par l'unité de traitement numérique du signal 150 du système de mesure 100 ; 200, pour déterminer le paramètre Ω à mesurer.

Cette unité de traitement numérique du signal 150 est par ailleurs adaptée à piloter le modulateur de phase 131C pour que ce dernier introduise ladite différence de phase ΔΦₘ entre les ondes contra-propagatives W₁ et W₂.

Selon une caractéristique particulièrement avantageuse du système de mesure 100 ; 200, l'unité de traitement numérique du signal 150 est adaptée plus précisément à commander le modulateur de phase 131C pour moduler la différence de phase ΔΦₘ selon une modulation périodique carrée multi-états.

La différence de phase ΔΦₘ est alors, au cours du temps, constante par morceaux, et, bien sûr, périodique.

La fréquence de modulation fₘ correspondante peut être égale, comme ici à la fréquence propre fₚ de l'interféromètre 130. Elle peut aussi, en variante, être égale à cette fréquence propre fₚ multipliée par un nombre impair.

Comme il est connu, la fréquence propre fₚ (proper frequency fₚ en anglais) de l'interféromètre est définie comme la moitié de l'inverse du temps de propagation τ_{B} dans la bobine, fₚ = 1/(2τ_{B}), et suit donc la loi *longueur de bobine multipliée par fréquence propre* égale à environ 100 km.kHz (ainsi, pour une bobine de 1 kilomètre de fibre optique, la fréquence propre de l'interféromètre est égale à environ 100 kilohertz).

Ici, la période de modulation, notée Tₘ, est donc égale à deux fois le temps de propagation τ_{B} dans la bobine de fibre 132 de l'interféromètre.

La modulation carrée multi-états mise en œuvre par l'unité de traitement numérique du signal 150 est ici une modulation « 4-états », telle que décrite plus haut dans la partie relative à l'objet de l'invention.

En variante, la modulation de phase carrée multi-états introduite par le modulateur de phase pourrait être la modulation à 2 états, ou encore la modulation dite « 2k+1 » mentionnées précédemment.

On rappelle que pour cette modulation « 4-états », la différence de phase ΔΦₘ présente successivement, au cours de chaque période de modulation Tm, 4 valeurs constantes ΔΦ_{b1} = π - α , ΔΦ_{b2} = π + α , ΔΦ_{b3} = - π + α et ΔΦb₄ = - π - α, le déphasage α étant compris par exemple entre π/64 et π/2.

L'évolution, au cours du temps t, de la différence de phase ΔΦ totale obtenue en sortie de l'interféromètre, pour cette modulation de phase « 4-états », est illustrée sur les figures 3 à 5.

Le système de mesure 100 ; 200 est configuré alors pour échantillonner et numériser (au moyen des deux blocs A/D représentés schématiquement sur les figures 1 et 2) le signal de mesure S_{OUT}(t) et le signal de référence S_{REF}(t) pour chacun des quatre paliers correspondant aux quatre états de la modulation, ΔΦ_{b1} à ΔΦ_{b4}. Sont obtenus ainsi :
- un signal de mesure numérisé S_{N-OUT}(t) qui prend quatre valeurs numériques S_{N-OUT-n} (avec n=1 à 4) pour chacun de ces quatre états de la modulation, et
- un signal de référence numérisé S_{N-REF}(t) qui prend quatre valeurs numériques S_{N-REF-n} (avec n=1 à 4) pour chacun de ces quatre états de la modulation.

Autrement formulé, le signal de mesure S_{OUT}(t) est échantillonné à quatre instants successifs tₙ (n=1 à 4) pour lesquels ΔΦₘ(tₙ) = ΔΦ_{bn}. Une valeur S_{N-OUT}(tₙ) (notée S_{N-OUT-n}) étant ainsi obtenue pour chacun de ces instants tₙ. Le signal de référence S_{REF} est échantillonné de même, une valeur S_{N-REF}(tₙ) (notée S_{N-REF-n}) étant ainsi obtenue à chacun de ces instants.

La mise au biais de l'interféromètre 130, obtenue grâce à cette modulation de phase, permet, après démodulation du signal numérique S_{N-OUT}, d'accéder à la différence de phase ΔΦ_{Ω} générée par le paramètre Ω à mesurer, comme cela est expliqué maintenant en référence aux figures 3 à 5.

La figure 3 correspond à une situation dans laquelle la différence de phase ΔΦ_{Ω} est nulle, et dans laquelle la modulation « 4-états » est réalisée exactement, c'est-à-dire de manière que :
- les différences de phase ΔΦ_{b1} et ΔΦ_{b2} soient effectivement symétriques par rapport à un déphasage de π, et de manière que
- les différences de phase ΔΦ_{b3} et ΔΦ_{b4} soient effectivement symétriques par rapport à un déphasage de - π.

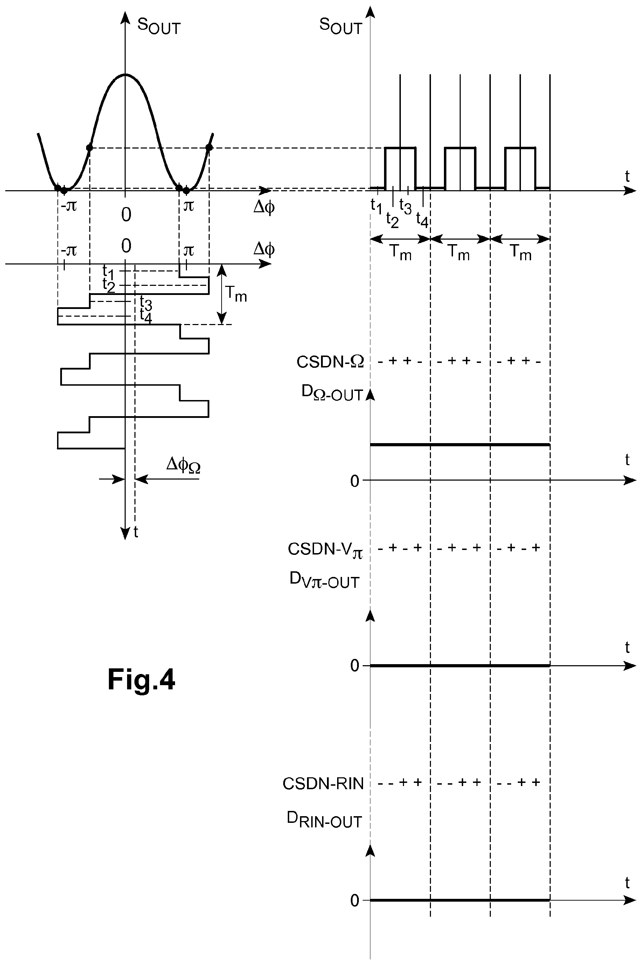

La figure 4 correspond à une situation dans laquelle la différence de phase ΔΦ_{Ω} est non-nulle, la modulation « 4-états » étant là encore réalisée exactement.

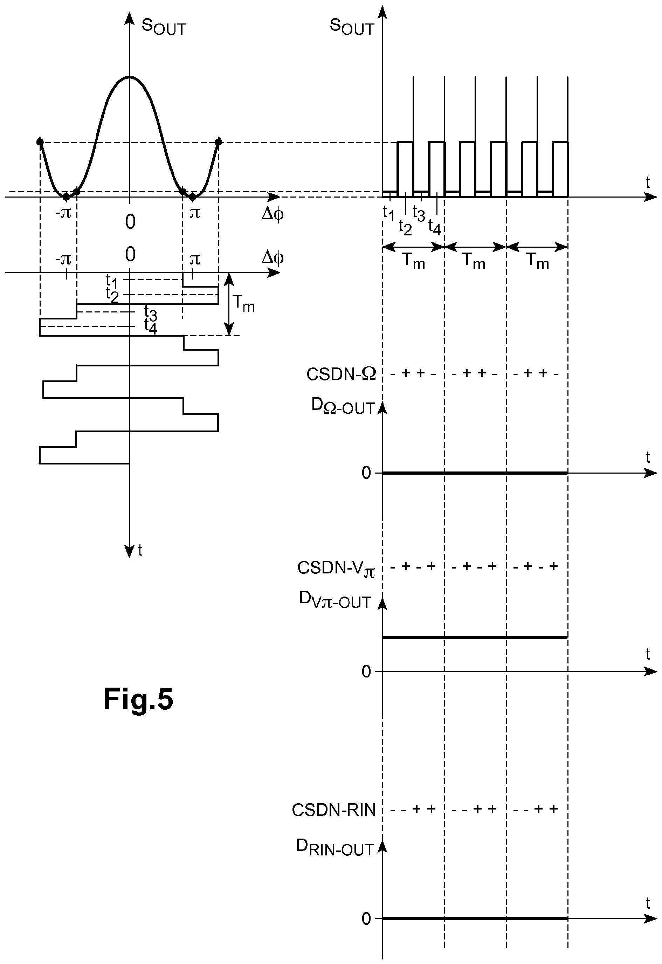

La figure 5 correspond quant à elle à une situation dans laquelle la différence de phase ΔΦ_{Ω} est nulle, mais dans laquelle le gain de conversion numérique-optique de la chaine de modulation de phase présente une valeur qui n'est pas adaptée (en l'occurrence trop grande) pour obtenir une modulation « 4-états » exacte.

L'unité de traitement numérique du signal 150 est adaptée ici à démoduler le signal de mesure numérisé S_{N-OUT} en lui appliquant un premier code séquentiel de démodulation numérique, noté CSDN-Ω, ou encore - + + -, qui consiste à sommer les quatre valeurs S_{N-OUT-1}, S_{N-OUT-2}, S_{N-OUT-3}, S_{N-OUT-4}, en les ayant multipliées préalablement, respectivement par -1, +1, +1, -1 : $CSDN - Ω \left({S}_{N - OUT}\left(t\right)\right) = - {S}_{N - OUT - 1} + {S}_{N - OUT - 2} + {S}_{N - OUT - 3} - {S}_{N - OUT - 4} .$

Ce signal démodulé dépend du paramètre Ω à mesurer, appelé aussi premier paramètre Ω dans la suite. Ce signal est noté D_{Ω-OUT}(t), pour *démodulation* numérique du signal de mesure numérisé S_{N-OUT}(t) selon le code CSDN-Ω sensible au premier *paramètre Ω* à mesurer, et donc : ${D}_{Ω - OUT} \left(t\right) = CSDN - Ω \left({S}_{N - OUT}\left(t\right)\right) = - {S}_{N - OUT - 1} + {S}_{N - OUT - 2} + {S}_{N - OUT - 3} - {S}_{N - OUT - 4} .$

La dépendance du premier signal de mesure démodulé D_{Ω-OUT}(t) avec le premier paramètre Ω est illustrée sur les figures 3 à 5 : les figures 3 et 5 montrent que ce signal démodulé est nul lorsque la différence de phase ΔΦ_{Ω} est nulle, tandis que dans le cas d'une différence de phase ΔΦ_{Ω} non-nulle, comme sur la figure 4, ce signal démodulé est lui aussi non-nul (et d'autant plus grand que cette différence de phase ΔΦ_{Ω} est grande).

Cette modulation 4-états permet aussi de générer un signal de mesure d'un deuxième paramètre, ou paramètre additionnel, noté V_{π,} représentatif du gain de conversion numérique-optique de la chaine de modulation de phase, à partir d'un deuxième code séquentiel de démodulation numérique, noté CSDN-V_{π}, ou encore - + - +. Ce signal démodulé, *dit de* V_{*π*,} dépendant du deuxième paramètre V_{π} à mesurer, est noté D_{Vπ-OUT}(t), pour *démodulation* numérique selon le code sensible au deuxième *paramètre V_{π}* à mesurer, et donc : ${D}_{V π - OUT} \left(t\right) = CSDN - {V}_{π} \left({S}_{N - OUT}\left(t\right)\right) = - {S}_{N - OUT - 1} + {S}_{N - OUT - 2} + {S}_{N - OUT - 3} - {S}_{N - OUT - 4} .$

Le premier code séquentiel de démodulation numérique CSDN-Ω (- + + -), donnant le premier paramètre Ω à mesurer, est quant à lui *insensible* à ce deuxième paramètre V_{π} à mesurer. Autrement formulé, un signal obtenu en appliquant le premier code séquentiel de démodulation numérique CSDN-Ω est indépendant de la valeur du deuxième paramètre V_{π}. A titre d'exemple, le signal D_{Ω-OUT}(t) obtenu dans la situation de la figure 3 est identique à celui obtenu dans la situation de la figure 5 (il s'agit en l'occurrence d'un signal nul), alors que ces deux situations correspondent à des valeurs différentes du paramètre V_{π}. Cela illustre l'insensibilité du premier code séquentiel de démodulation numérique CSDN-Ω au deuxième paramètre V_{π}.

De façon similaire, le deuxième code séquentiel de démodulation numérique CSDN-V_{π} (- + - +), donnant le deuxième paramètre V_{π} à mesurer, est quant à lui *insensible* au premier paramètre Ω à mesurer (comme on le constate en comparant les figures 3 et 4).

La modulation 4-états permet donc d'avoir accès de façon indépendante à deux paramètres à mesurer, Ω et V_{π,} en utilisant la même chaine de détection, amplification, filtrage et numérisation de la puissance de sortie P_{OUT}, pour donner un signal de mesure numérisé, S_{N-OUT}(t), qui est alors simplement traité avec deux codes séquentiels *différents* de démodulation numérique, CSDN-Ω et CSDN-V_{π}, qui sont, chacun, respectivement *sensibles* à leur paramètre à mesurer, Ω ou V_{π,} et respectivement *insensibles* à l'autre paramètre à mesurer, V_{π} ou Ω. On notera que les signaux produits par ces deux codes séquentiels de démodulation numérique, CSDN-Ω et CSDN-V_{π} sont affectés par le RIN.

Comme indiqué ci-dessus, dans une variante du système de mesure selon l'invention, l'unité de traitement numérique du signal est adaptée à commander le modulateur de phase pour qu'il applique une modulation de phase dite "2k+1", au lieu d'une modulation de phase "4-états". Pour cette modulation "2k+1", deux codes séquentiels *différents* de démodulation numérique, respectivement *sensibles* à leur paramètre à mesurer, Ω ou V_{π}, et respectivement *insensibles* à l'autre paramètre à mesurer, V_{π} ou Ω peuvent aussi être mis en œuvre, comme cela est décrit dans le document USP 9,291,458.

Le signal de mesure S_{OUT} permet, compte tenu des opérations de démodulation décrites ci-dessus, de déterminer les premier et deuxième paramètres Ω et V_{π}.

Le signal de référence S_{REF} peut quant à lui être utilisé, comme expliqué dans la partie relative à l'arrière-plan technologique, pour compenser des fluctuations du signal de mesure S_{OUT} causées par le RIN.

A cette fin, l'unité de traitement numérique du signal 150 est adaptée ici à :
- appliquer au signal de référence numérisé S_{N-REF}(t) le premier code séquentiel de démodulation numériques CSDN-Ω, pour obtenir un premier signal de référence démodulé D_{Ω-REF}, puis à
- déterminer un premier signal de mesure compensé D_{Ω-COMP}(t), en effectuant une différence pondérée entre le premier signal de mesure démodulé D_{Ω-OUT}, et le premier signal de référence démodulé D_{Ω-REF} affecté d'un coefficient de pondération β : D_{Ω-COMP} = D_{Ω-OUT} - β. D_{Ω-REF}.

L'unité de traitement numérique du signal 150 est adaptée ici en outre pour :
- appliquer au signal de référence numérisé S_{N-REF} le deuxième code séquentiel de démodulation numériques CSDN-V_{π}, pour obtenir un deuxième signal de référence démodulé D_{Vπ-REF}, puis pour
- déterminer un deuxième signal de mesure compensé D_{Vπ-COMP}, en effectuant une différence pondérée entre le deuxième signal de mesure démodulé D_{Vπ-OUT}, et le deuxième signal de référence démodulé D_{Vπ-REF} affecté du même coefficient de pondération β : D_{Vπ-COMP} = D_{Vπ-OUT} - β.D_{Vπ-REF}, de manière à compenser également l'influence du RIN sur la mesure du deuxième paramètre V_{π}.

De manière particulièrement remarquable, l'unité de traitement numérique du signal 150 est adaptée à déterminer un troisième signal compensé D_{RIN-COMP} en :
- appliquant un troisième code séquentiel numérique de démodulation CSND-RIN, insensible au premier paramètre Ω à mesurer et sensible au bruit relatif d'intensité en excès (ou RIN),
   - au signal de mesure numérisé S_{N-OUT}, pour produire un troisième signal de mesure démodulé D_{RIN-OUT}, sensible uniquement au RIN, et

   - au signal de référence numérisé S_{N-REF}, pour produire un troisième signal de référence démodulé D_{RIN-REF}, sensible uniquement au RIN, puis en
- calculant une différence pondérée entre le troisième signal de mesure démodulé D_{RIN-OUT} et le troisième signal de référence démodulé D_{RIN-REF}, le troisième signal de référence démodulé D_{RIN-REF} étant affecté du même coefficient de pondération β que celui utilisé pour compenser l'influence du RIN sur le premier signal de mesure démodulé D_{Ω-COMP}.

L'unité de traitement numérique du signal 150 est adaptée en outre à asservir ledit coefficient de pondération β à une valeur optimale βₒₚₜ qui minimise ou rend inférieure à un seuil donné, ici minimise, l'écart statistique σ_{RIN} du troisième signal compensé D_{RIN-COMP}.

Le coefficient de pondération β est ainsi asservi à ladite valeur βₒₚₜ, pour laquelle le RIN est compensé de manière optimale pour le troisième signal compensé D_{RIN-COMP}, *mais aussi,* pour le premier signal de mesure compensé D_{Ω-COMP}, réduisant ainsi au maximum l'influence du RIN sur la mesure du premier paramètre Ω. Le RIN est aussi compensé de manière optimale pour le deuxième signal de mesure compensé D_{Vπ-COMP}, réduisant ainsi au maximum l'influence du RIN sur la mesure du deuxième paramètre V_{π}.

Le code séquentiel de démodulation numérique *supplémentaire* CSDN-RIN (ou troisième code séquentiel de démodulation numérique) est ici plus précisément *insensible* aussi bien au premier paramètre Ω qu'au deuxième paramètre V_{π} à mesurer. Ce code supplémentaire CSDN-RIN ne sera donc sensible qu'au RIN et permettra l'asservissement de sa compensation sans être perturbé par les deux paramètres à mesurer, Ω et V_{π}.

Dans le cas de la modulation « 4-états » mise en œuvre ici, deux exemples d'un tel code de démodulation numérique CSDN-RIN peuvent notamment être donnés : une première séquence + + - - (ou - - + +), ou bien une deuxième séquence + + + + - - - - (ou - - - - + + + +) qui s'étend alors sur 8 états successifs et donc 2 périodes Tₘ de la modulation 4-états.

Dans le cas de la séquence + + - - , par exemple, le troisième signal de mesure démodulé D_{RIN-OUT}(t), sensible uniquement au RIN, est obtenu conformément à la formule suivante :
D_{RIN-OUT}(t) = OCSDN-RIN(S_{N-OUT}(t)) = + S_{N-OUT-1} + S_{N-OUT-2} - S_{N-OUT-3} - S_{N-OUT-4}, et, de même : ${D}_{RIN - REF} \left(t\right) = CSDN - RIN \left({S}_{N - REF}\left(t\right)\right) = + {S}_{N - REF - 1} + {S}_{N - REF - 2} - {S}_{N - REF - 3} - {S}_{N - REF - 4} .$

Les figures 3 à 5 illustrent, dans le cas de cette séquence + + - -, l'insensibilité du code séquentiel de démodulation numérique supplémentaire CSDN-RIN vis-à-vis des premier et deuxième paramètres Ω et V_{π}. On constate en effet, en comparant les figures 3 et 4, que le troisième signal de mesure démodulé D_{RIN-OUT}(t) est identique (en l'occurrence nul) dans les situations correspondant à ces deux figures, alors qu'elles correspondent à deux valeurs différentes du premier paramètre Ω. De même, on constate en comparant les figures 3 et 5, que le troisième signal de mesure démodulé D_{RIN-OUT}(t) ne dépend pas du deuxième paramètre V_{π}.

Comme indiqué ci-dessus, la différence de phase ΔΦₘ pourrait, en variante, être modulée selon une modulation à 2 états, et non selon cette modulation « 4-états ». Dans le cadre de cette variante, le premier code séquentiel de démodulation numérique CSDN-Ω est alors réalisé selon la séquence - +, sur une période, et donc - + - + sur deux périodes de modulation. Le code séquentiel de démodulation numérique supplémentaire CSDN-RIN est alors réalisé selon la séquence + + - - ou - - + +, sur deux périodes de modulation (on notera qu'il est effectivement *insensible* au paramètre Ω à mesurer).

Pour compenser efficacement le RIN, le signal de mesure doit être resynchronisé avec le signal de référence avant d'effectuer lesdites différences pondérées, comme expliqué dans la partie relative à l'arrière-plan technologique. Pour cela, les signaux compensés sont déterminés conformément aux formules suivantes : ${D}_{Ω -COMP} \left(t\right) = {D}_{Ω -OUT} \left(t\right) - β . {D}_{Ω -REF} \left(t-τ\right) ,$ ${D}_{V π -COMP} \left(t\right) = {D}_{V π -OUT} \left(t\right) - β . {D}_{V π -REF} \left(t-τ\right)$ et ${D}_{RIN-COMP} \left(t\right) = {D}_{RIN-OUT} \left(t\right) - β . {D}_{RIN-REF} \left(t-τ\right) ,$ où τ est le retard entre le signal de mesure et le signal de référence, causé notamment par le temps de parcours de l'interféromètre.

Afin de pouvoir réaliser simplement cette resynchronisation, sans ligne à retard optique ou électronique spécifique, la partie optique du système de mesure est configurée ici de manière à égaliser :
- le retard τ entre le signal de mesure et le signal de référence, avec
- le temps de propagation τ_{B} dans la bobine, qui définit la période de modulation multi-états Tₘ, égale ici à 2 τ_{B}.

Ceci est fait en égalisant :
- le chemin optique entre la source lumineuse 110 et le deuxième détecteur 142 d'un côté, avec, de l'autre côté,
- la somme du chemin optique entre la source lumineuse 110 et le port d'entrée-sortie de l'interféromètre 130, et du chemin optique entre ce port d'entrée-sortie et le premier détecteur 141.

La resynchronisation des signaux de mesure et de référence est alors réalisée, de manière avantageusement simple, en décalant les séquences des codes de démodulation numérique, lorsqu'ils sont appliqués au signal de référence, du nombre d'états correspondant au temps de propagation τ_{B} dans la bobine et donc, ici, du nombre d'états correspondant à la moitié de la période de modulation Tₘ de la modulation carrée multi-états.

Dans l'exemple de la modulation 4-états, ce décalage est de deux états, le temps de propagation τ_{B} dans la bobine étant deux fois la durée d'un état. La démodulation du signal de mesure, selon le premier code de démodulation numérique CSDN-Ω, par exemple, est alors réalisée conformément à la formule suivante : ${D}_{Ω - OUT} \left(t\right) = - {S}_{N-OUT} \left({t}_{k + 1}\right) + {S}_{N-OUT} \left({t}_{k + 2}\right) + {S}_{N-OUT} \left({t}_{k + 3}\right) - {S}_{N-OUT} \left({t}_{k + 4}\right) ,$ tandis que la démodulation du signal de référence par ce code CSDN-Ω est alors réalisée conformément à la formule suivante : ${D}_{Ω - REF} \left(t-τ\right) = {D}_{Ω - REF} \left(t-{τ}_{B}\right) = CSDN - Ω \left({S}_{N - REF}\left(t-{τ}_{B}\right)\right)$ $= - {S}_{N - REF} \left({t}_{k - 1}\right) + {S}_{N - REF} \left({t}_{k}\right) + {S}_{N - REF - 3} \left({t}_{k + 1}\right) - {S}_{N - REF} \left({t}_{k + 2}\right)$ où tₖ₊ₙ , n=1 à 4, est l'instant de la k^{ème} période de modulation pour lequel ΔΦₘ(tₖ₊ₙ) = ΔΦ_{bn} (autrement formulé, cet instant tₖ₊ₙ correspond, dans la k^{ème} période de modulation, à l'état de modulation n).

La même règle de décalage est appliquée ici pour produire les signaux de référence démodulés et resynchronisés D_{Vπ-REF} (t-τ) et D_{RIN-REF}(t-τ).

Dans le cas d'une modulation carrée multi-états quelconque, les signaux démodulés de référence D_{Ω-REF} et D_{RIN-REF} (ainsi que D_{Vπ-REF}) sont resynchronisés en remplaçant, dans les calculs de démodulation numérique, la séquence des valeurs S_{N-REF}(tₖ₊ₙ), n=1 à 2m, n étant le numéro d'ordre de l'état de modulation dans la période, et 2m est le nombre d'états de modulation, par la séquence des valeurs S_{N-REF}(tₖ₊ₙ₋ₘ). A titre d'exemple, la modulation à 2 états correspond à m=1, tandis que la modulation « 4-états » correspond à m=2.

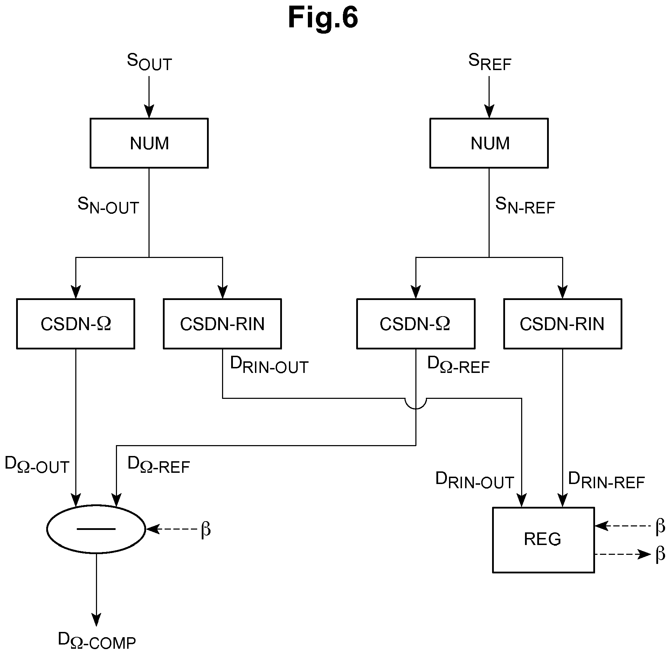

Les opérations de traitement du signal mises en œuvre par le système de mesure selon l'invention sont résumées maintenant, en référence à la figure 6.

Ces opérations de traitement commencent par la numérisation des signaux (analogiques) de mesure S_{OUT} et de référence S_{REF}, déjà mentionnée ci-dessus (bloc NUM sur la figure 6). Cette numérisation est précédée d'une amplification et d'un filtrage fréquentiel respectant le critère de Shannon de cette numérisation. Ici, ce filtrage fréquentiel élimine en outre la composante continue des signaux de mesure S_{OUT} et de référence S_{REF}.

Les premier, deuxième et troisième codes séquentiels de démodulation numérique sont ensuite appliqués aux signaux de mesure et de référence numérisés S_{N-OUT} et S_{N-REF}, produisant ainsi :
- les premiers signaux de mesure et de référence démodulés D_{Ω-OUT} et D_{Ω-REF},
- les deuxième signaux de mesure et de référence démodulés D_{Vπ-OUT} et D_{Vπ-REF}, et
- les troisièmes signaux de mesure et de référence démodulés D_{RIN-OUT} et D_{RIN-REF}.

Ces démodulations sont réalisées ici de manière à resynchroniser les signaux de référence démodulés, avec les signaux de mesure démodulés, comme expliqué plus haut.

Le premier signal de mesure compensé D_{Ω-COMP} est ensuite déterminé en effectuant la différence pondéré des premiers signaux de mesure et de référence démodulés D_{Ω-OUT} et D_{Ω-REF} (le premier signal de référence démodulé D_{Ω-REF} étant affecté du coefficient de pondération β).

Une valeur du premier paramètre Ω est ensuite déterminée sur la base de ce signal de mesure D_{Ω-COMP}, compensé du RIN.

Le deuxième signal de mesure compensé D_{Vπ-COMP} est déterminé par ailleurs en effectuant la différence pondéré des deuxièmes signaux de mesure et de référence démodulés D_{Vπ-OUT} et D_{Vπ-REF} (le deuxième signal de référence démodulé D_{Vπ-REF} étant affecté du même coefficient de pondération β).

Une valeur du deuxième paramètre V_{π} est ensuite déterminée, sur la base de ce signal de mesure D_{Vπ-COMP}, compensé du RIN.

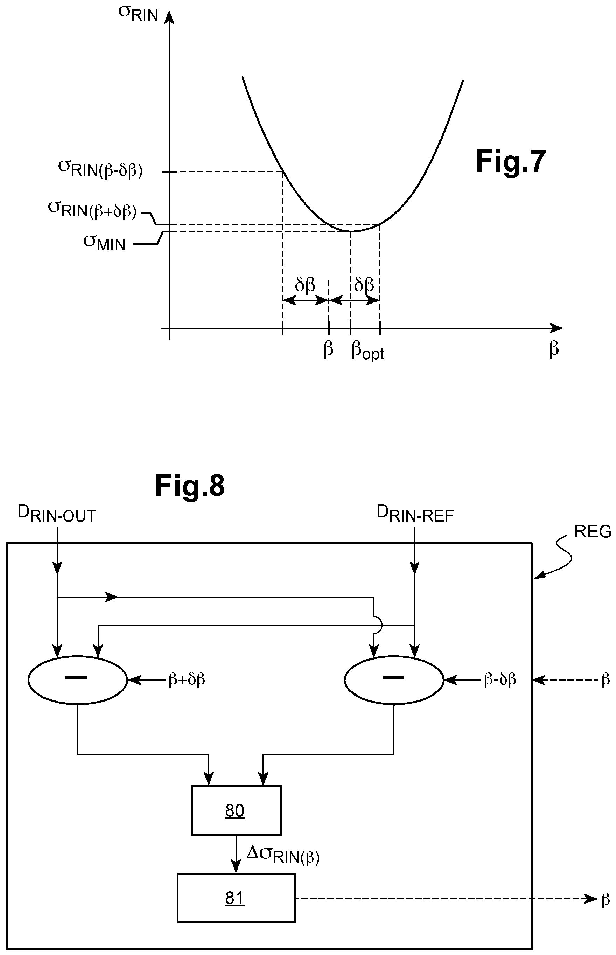

Les troisièmes signaux de mesure et de référence démodulés, D_{RIN-OUT}(t) et D_{RIN-REF}(t), sont exploités quant à eux pour asservir ledit même coefficient de pondération β à sa valeur optimale βₒₚₜ.Cet asservissement, décrit maintenant plus en détail, est représenté schématiquement par le bloc REG de la figure 6 (repris plus en détail sur la figure 8).

On rappelle que la valeur optimale βₒₚₜ du coefficient de pondération β minimise l'écart statistique σ_{RIN} du troisième signal compensé D_{RIN-COMP} (appelé aussi signal compensé supplémentaire), qui dépend du coefficient de pondération β, comme représenté schématiquement sur la figure 7.

En effet, si β est trop petit, il y aura un résidu de dépendance au RIN dû à la sous-compensation du RIN de D_{RIN-OUT}(t), le bruit *absolu* d'intensité du produit β.D_{RIN-REF}(t-τ) étant alors trop faible par rapport à celui de D_{RIN-OUT}(t).

Il en sera de même si β est trop grand, à cause de la surcompensation apportée par le bruit *absolu* d'intensité de β.D_{RIN-REF}(t-τ) qui est alors trop fort par rapport à celui de D_{RIN-OUT}(t).

Lorsque la valeur de β est égale à sa valeur optimale βₒₚₜ, l'influence du RIN sur le signal D_{RIN-OUT}(t) est en revanche totalement éliminée (les bruits absolus d'intensité des signaux β.D_{RIN-REF}(t-τ) et D_{RIN-OUT}(t) étant équilibrés), et l'écart statistique σ_{RIN} de ce signal atteint alors le minimum théorique σ_{MIN} donné par le bruit photonique.

Pour déterminer l'écart statistique σ_{RIN}, l'unité de traitement numérique du signal 150 est adaptée plus précisément ici pour calculer une moyenne de la valeur absolue de la différence D_{RIN-COMP} - <D_{RIN-COMP} > entre le signal compensé supplémentaire D_{RIN-COMP} et sa valeur moyenne <D_{RIN-COMP} > : ${σ}_{RIN} = < \left|{D}_{RIN - COMP}-<{D}_{RIN - COMP}>\right| >$

Comme la valeur moyenne des signaux D_{RIN-OUT} et D_{RIN-REF} est nulle, la valeur moyenne<D_{RIN-COMP}> est également nulle, si bien que l'écart statistique σ_{RIN} est calculé ici simplement comme la valeur moyenne de la valeur absolue |D_{RIN-COMP}|: ${σ}_{RIN} = < \left|{D}_{RIN - COMP}\right| >$

En variante, l'écart statistique σ_{RIN} du troisième signal compensé D_{RIN-COMP} pourrait être déterminée en calculant l'écart-type, ou encore la variance de ce signal, au lieu de calculer la valeur moyenne de sa valeur absolue.

Ici, l'asservissement du coefficient de pondération β à sa valeur optimale βₒₚₜ est réalisé en :
- calculant une différence Δσ_{RIN}(β) entre
   - une première valeur de l'écart statistique σ_{RIN}(β+δβ) du troisième signal compensé D_{RIN-COMP} calculée pour une première valeur décalée β+δβ du coefficient de pondération β, et
   - une deuxième valeur de l'écart statistique σ_{RIN}(β-δβ) du troisième signal compensé D_{RIN-COMP} calculée pour une deuxième valeur décalée β-δβ du coefficient de pondération β, et en
- asservissant le coefficient de pondération β de manière à annuler cette différence Δσ_{RIN}(β).

Comme l'écart statistique σ_{RIN} du troisième signal compensé D_{RIN-COMP} est minimale pour ladite valeur optimale βₒₚₜ (voir figure 7), la différence Δσ_{RIN}(β) s'annule pour β=βₒₚₜ. Asservir ainsi le coefficient de pondération β de manière à annuler la différence Δσ_{RIN}(β) amène donc effectivement le coefficient de pondération β à sa valeur optimale βₒₚₜ.

Ici, l'unité de commande est programmée plus précisément pour calculer la différence Δσ_{RIN}(β)= σ_{RIN}(β+δβ) - σ_{RIN}(β-δβ) en sommant au cours du temps la différence des valeurs absolues |D_{RIN-COMP}(β + δβ)| - |D_{RIN-COMP}(β - δβ)|: $Δ {σ}_{RIN} \left(β\right) = {\sum }_{k} \left|{D}_{RIN - COMP}\left(β+δβ\right)\right| - \left|{D}_{RIN - COMP}\left(β-δβ\right)\right|$ où la somme Σₖ désigne une somme sur plusieurs périodes de modulation.

Le calcul de la différence Δσ_{RIN}(β) correspond, sur la figure 8, au bloc 80.

La différence Δσ_{RIN}(β) est ensuite utilisée comme signal d'erreur pour asservir la coefficient de pondération β, au moyen ici d'une correction proportionnelle itérative de la forme : $β \left(i+1\right) = β \left(i\right) - γ . Δ {σ}_{RIN} \left(β\left(i\right)\right)$ où γ est le coefficient de contre-réaction de la boucle d'asservissement.

On notera que cette correction proportionnelle itérative (correspondant, sur la figure 8, au bloc 81) conduit naturellement à une correction du type intégrale, sans nécessiter de traitement supplémentaire, du fait que le signal d'erreur Δσ_{RIN} est produit ici par accumulation au cours du temps des différences |D_{RIN-COMP}(β(i) + δβ)| - |D_{RIN-COMP}(β(i) - δ(β)|.

L'unité de traitement numérique du signal 150 est ici adaptée en outre pour commander le modulateur de phase 131C de manière à appliquer entre les deux ondes contra-propagatives W₁, W₂ un déphasage de contre-réaction, fonction du signal de mesure S_{OUT}, de manière à compenser le déphasage ΔΦ_{Ω} non-réciproque entre ces deux ondes W₁, W₂ dépendant du premier paramètre Ω à mesurer. Autrement formulé, le système de mesure 100 ; 200 est adapté à mesurer le paramètre Ω en boucle fermée.

Le système de mesure 100 ; 200 selon l'invention peut entrer dans la réalisation d'un gyromètre à fibre optique, pouvant lui-même faire partie d'une centrale d'attitude ou de navigation inertielle.

Le paramètre physique Ω à mesurer correspond alors, comme indiqué ci-dessus, à la composante de la vitesse de rotation du gyromètre parallèle à l'axe de la bobine de fibre.

En variante, le système de mesure peut faire partie d'un capteur de courant ou de champ magnétique. Dans ce cas, le paramètre physique à mesurer est un courant électrique ou un champ magnétique, qui par effet FARADAY induit une variation de la différence de phase non réciproque entre les deux ondes lumineuses contra-propagatives se propageant dans la bobine de fibre.

## Revendications

1. Système de mesure (100 ; 200) d'un paramètre (Ω) comportant :
- une source lumineuse (110) d'émission spontanée amplifiée par émission stimulée, émettant une onde lumineuse source (W_{S}) présentant une puissance lumineuse source qui est affectée par un bruit d'intensité relative en excès,
- un routeur optique (120 ; 220) configuré pour :
- prélever une onde lumineuse d'entrée (W_{IN}) à partir de ladite onde lumineuse source (W_{S}), cette onde lumineuse d'entrée (W_{IN}) étant dirigée vers un interféromètre (130) en anneau de Sagnac comportant un polariseur (131A), un séparateur-recombineur (131B), un modulateur de phase (131C) et une bobine de fibre (132) à conservation de polarisation, l'interféromètre (130) recevant, en entrée, ladite onde lumineuse d'entrée (W_{IN}) dont l'état de polarisation est sélectionné par le polariseur (131A), et produisant en sortie une onde lumineuse retour (W_{BACK}) selon le même état de polarisation que l'onde lumineuse d'entrée (W_{IN}), l'onde lumineuse retour (W_{BACK}) présentant une puissance lumineuse retour fonction du paramètre (Ω) à mesurer et fonction d'une différence de phase ΔΦₘ entre deux ondes contra-propagatives (W₁, W₂) se propageant dans l'interféromètre (130) introduite par le modulateur de phase (131C),
- prélever, à partir de ladite onde lumineuse retour (W_{BACK}), une onde lumineuse de sortie (W_{OUT}), cette onde lumineuse de sortie étant dirigée vers un premier détecteur (141) de rayonnement optique qui délivre un signal électrique analogique de mesure (S_{OUT}) représentatif d'une puissance de sortie présentée par l'onde lumineuse de sortie (W_{OUT}), et pour
- prélever une onde lumineuse de référence (W_{REF}) à partir de ladite onde lumineuse source (W_{S}), cette onde lumineuse de référence (W_{REF}) présentant le même état de polarisation que l'onde lumineuse d'entrée (W_{IN}) et que l'onde lumineuse retour (W_{BACK}), et étant dirigée vers un deuxième détecteur (142) de rayonnement optique qui délivre un signal électrique analogique de référence (S_{REF}) représentatif d'une puissance de référence présentée par l'onde lumineuse de référence (W_{REF}),
- le système de mesure (100, 200) étant configuré pour échantillonner et numériser le signal électrique analogique de mesure (S_{OUT}) et, respectivement, le signal électrique analogique de référence (S_{REF}) et obtenir un signal de mesure numérisé et, respectivement, un signal de référence numérisé et
- une unité de traitement numérique du signal (150) adaptée à traiter les signaux de mesure numérisé et de référence numérisé pour fournir une mesure dudit paramètre (Ω), à partir d'un signal de mesure compensé (D_{Ω-COMP}) qui est déterminé en calculant une différence pondérée entre :
- un premier signal fonction du signal de mesure numérisé, et
- un deuxième signal fonction du signal de référence numérisé, le signal de référence numérisé étant resynchronisé avec le signal de mesure numérisé, et ce deuxième signal étant affecté d'un coefficient de pondération (β),
**caractérisé en ce que** l'unité de traitement numérique du signal (150) est adaptée :
- à commander le modulateur de phase (131C) pour moduler la différence de phase ΔΦₘ selon une modulation périodique carrée multi-états,
- à déterminer le signal de mesure compensé (D_{Ω-COMP}) en appliquant en outre un premier code séquentiel de démodulation numérique (CSDN-Ω), sensible audit paramètre (Ω) à mesurer,
- à déterminer un signal compensé supplémentaire (D_{RIN-COMP})
- en calculant une différence pondérée entre un premier signal supplémentaire, fonction du signal de mesure numérisé, et un deuxième signal supplémentaire, fonction du signal de référence numérisé, le signal de référence numérisé étant resynchronisé avec le signal de mesure numérisé, et ce deuxième signal supplémentaire étant affecté du même coefficient de pondération (β) que le deuxième signal,
- et en appliquant un code séquentiel de démodulation numérique supplémentaire (CSDN-RIN), insensible audit paramètre (Ω) à mesurer,
- et à asservir ledit coefficient de pondération (β) à une valeur optimale (β_{οpt}) qui minimise ou rend inférieure à un seuil donné l'écart statistique σ_{RIN} du signal compensé supplémentaire (D_{RIN-COMP}).

2. Système de mesure (100 ; 200) selon la revendication 1 dans lequel :
- la puissance de sortie présentée par l'onde lumineuse de sortie (W_{OUT}) dépend en outre d'un paramètre additionnel,
- l'unité de traitement numérique du signal (150) est adaptée en outre à déterminer ledit paramètre additionnel, à partir d'un signal de mesure démodulé (D_{Vπ-OUT}) produit en appliquant au signal de mesure numérisé un deuxième code séquentiel de démodulation numérique (CSDN-V_{π}), insensible au paramètre (Ω) à mesurer et sensible audit paramètre additionnel, et dans lequel
- le code séquentiel de démodulation numérique supplémentaire (CSDN-RIN) est en outre insensible audit paramètre additionnel.

3. Système de mesure (100 ; 200) selon la revendication 2, dans lequel :
- la différence de phase ΔΦₘ présente successivement, au cours de chaque période de modulation, quatre valeurs constantes ΔΦ_{b1} = π - α , ΔΦ_{b2} = π + α , ΔΦ_{b3} = - π + α et ΔΦ_{b4} = - π - α, α étant un déphasage inférieur à π/2,
- l'application du premier code séquentiel de démodulation numérique (CSDN-Ω) à un signal à traiter consiste à sommer quatre valeurs x₁, x₂, x₃, x₄ , présentées par ce signal en réponse respectivement à chacune des quatre valeurs de différence de phase ΔΦ_{b1}, ΔΦ_{b2}, ΔΦ_{b3}, ΔΦ_{b4}, les quatre valeurs x₁, x₂, x₃, x₄ ayant été multipliées, préalablement à cette sommation, respectivement par -1, +1, +1, -1, ou, respectivement, par +1, -1, -1, +1, et dans lequel
- l'application du deuxième code séquentiel de démodulation numérique (CSDN-V_{π}) au signal à traiter consiste à sommer les quatre valeurs x₁, x₂, x₃, x₄ en les ayant préalablement multipliées respectivement par -1, +1, -1, +1, ou, respectivement, par +1, -1, +1, -1.

4. Système de mesure (100 ; 200) selon l'une des revendications 1 à 3, dans lequel les deux démodulations réalisées respectivement par le premier code séquentiel de démodulation numérique (CSDN-Ω) et par le code séquentiel de démodulation numérique supplémentaire (CSDN-RIN) sont en quadrature l'une avec l'autre.

5. Système de mesure (100 ; 200) selon l'une des revendications 1 à 3, dans lequel le code séquentiel de démodulation numérique supplémentaire (CSDN-RIN) est sensible à une composante périodique présentant une fréquence égale à la fréquence de modulation divisée par un nombre pair.

6. Système de mesure (100; 200) selon la revendication 4, prise dans la dépendance de la revendication 3, dans lequel l'application du code séquentiel de démodulation numérique supplémentaire (CSDN-RIN) consiste à sommer les quatre valeurs x₁, x₂, x₃, x₄ en les ayant préalablement multipliées respectivement par +1, +1, -1, -1, ou, respectivement, par -1, -1, +1, +1.

7. Système de mesure (100 ; 200) selon la revendication 5, prise dans la dépendance de la revendication 3, dans lequel l'application du code séquentiel de démodulation numérique supplémentaire (CSDN-RIN) consiste à sommer les quatre valeurs x₁, x₂, x₃, x₄ présentées par le signal à traiter sur une période de modulation, et à leur soustraire la somme des quatre valeurs x₁, x₂, x₃, x₄ présentées par le signal à traiter sur la période de modulation suivante.

8. Système de mesure (100 ; 200) selon l'une des revendications 1 à 7, dans lequel l'application du code séquentiel de démodulation numérique supplémentaire (CSDN-RIN) à un signal consiste à appliquer à ce signal au moins une opération mathématique, à l'exception d'une transformation de Fourier.

9. Système de mesure (100 ; 200) selon l'une des revendications 1 à 8, dans lequel l'unité de traitement numérique du signal (150) est adaptée à déterminer l'écart statistique σ_{RIN} du signal compensé supplémentaire D_{RIN-COMP} en calculant une moyenne de la valeur absolue de la différence D_{RIN-COMP} - <D_{RIN-COMP}> entre le signal compensé supplémentaire D_{RIN-COMP} et sa valeur moyenne <D_{RIN-COMP}>.

10. Système de mesure (100 ; 200) selon l'une des revendications 1 à 9, dans lequel l'asservissement du coefficient de pondération β à ladite valeur optimale (βₒₚₜ) est réalisé en :
- calculant une différence Δσ_{RIN}(β) entre
- une première valeur de l'écart statistique σ_{RIN}((β+δβ) du signal compensé supplémentaire D_{RIN-COMP}, calculée pour une première valeur décalée β+δβ du coefficient de pondération β, et
- une deuxième valeur de l'écart statistique σ_{RIN}(β-δβ) du signal compensé supplémentaire D_{RIN-COMP}, calculée pour une deuxième valeur décalée β-δβ du coefficient de pondération β, et en
- asservissant le coefficient de pondération β de manière à annuler cette différence Δσ_{RIN}(β).

11. Système de mesure (100 ; 200) selon l'une des revendications 1 à 10, adapté pour appliquer un déphasage de contre-réaction entre les deux ondes contra-propagatives (W₁, W₂) se propageant dans l'interféromètre (130), au moyen dudit modulateur de phase (131C), en fonction du signal de mesure (S_{OUT}), de manière à compenser un déphasage non-réciproque entre les deux ondes contra-propagatives (W₁, W₂) dépendant dudit paramètre (Ω) à mesurer.

12. Gyromètre comportant un système de mesure (100; 200) selon l'une des revendications 1 à 11, ledit paramètre physique à mesurer étant une composante de la vitesse de rotation (Ω) dudit gyromètre.

13. Centrale d'attitude ou de navigation inertielle comportant au moins un gyromètre selon la revendication 12.

## Patentansprüche

1. System (100; 200) zum Messen eines Parameters (Ω) mit
- einer Lichtquelle (110) mit einer durch angeregte Emission verstärkten spontanen Emission, die eine Quellenlichtwelle (Ws) aussendet, die eine durch ein Rauschen relativ überschüssiger Stärke beeinträchtigte Leuchtkraft aufweist,
- einem optischen Router (120; 220), der dazu ausgelegt ist,
- von der Quellenlichtwelle (Ws) eine Eingangslichtwelle (W_{IN}) zu entnehmen, wobei diese Eingangslichtwelle (W_{IN}) auf ein Sagnac-Ring-Interferometer (130) gerichtet ist, das einen Polarisator (131A), einen Separator-Rekombinator (131B), einen Phasenmodulator (131C) und eine Faserspule (132) mit Polarisationserhalt aufweist, wobei das Interferometer (130) am Eingang die Eingangslichtwelle (W_{IN}) empfängt, deren Polarisationszustand durch den Polarisator (131A) ausgewählt wird, und am Ausgang eine Retourlichtwelle (W_{BACK}) im selben Polarisationszustand wie die Eingangslichtquelle (W_{IN}) erzeugt, wobei die Retourlichtwelle (W_{BACK}) eine Retourleuchtkraft in Abhängigkeit vom zu messenden Parameter (Ω) und in Abhängigkeit von einer durch den Phasenmodulator (131C) eingebrachten Phasendifferenz ΔΦₘ zwischen zwei sich im Interferometer (130) ausbreitenden gegenläufigen Wellen (W₁, W₂) aufweist,
- von der Retourlichtwelle (W_{BACK}) eine Ausgangslichtwelle (W_{OUT}) zu entnehmen, wobei diese Ausgangslichtwelle auf einen ersten Detektor (141) für optische Strahlung gerichtet wird, der ein elektrisches analoges Meßsignal (S_{OUT}) liefert, das für eine von der Ausgangslichtwelle (W_{OUT}) gelieferte Ausgangsleistung steht, und
- von der Quellenlichtwelle (Ws) eine Bezugslichtwelle (W_{REF}) abzuleiten, wobei die Bezugslichtquelle (W_{REF}) den gleichen Polarisationszustand wie die Eingangslichtwelle (W_{IN}) und die Retourlichtwelle (W_{BACK}) aufweist und auf einen zweiten Detektor (142) für optische Strahlung gerichtet ist, der ein elektrisches analoges Referenzsignal (S_{REF}) abgibt, das für eine von der Bezugslichtwelle (W_{REF}) abgegebene Bezugsleistung steht,
- wobei das Meßsystem (100, 200) dazu ausgelegt ist, das elektrische analoge Meßsignal (S_{OUT}) und das elektrische analoge Referenzsignal (S_{REF}) abzutasten und zu digitalisieren und ein digitales Meßsignal und ein digitales Referenzsignal zu erhalten,
- einer Einheit (150) zum digitalen Verarbeiten des Signals, die dazu ausgelegt ist, das digitalisierte Meßsignal und das digitalisierte Referenzsignal zu verarbeiten, um ein Maß für den Parameter (Ω) von einem kompensierten Meßsignal (D_{Ω-COMP}), das bestimmt wird, indem eine gewichtete Differenz zwischen
- einem ersten Signal, das vom digitalen Meßsignal abhängt, und
- einem zweiten Signal, das vom digitalisierten Referenzsignal abhängt, berechnet wird, wobei das digitalisierte Referenzsignal wieder mit dem digitalisierten Meßsignal synchronisiert wird, und wobei das zweite Signal einem Gewichtungskoeffizienten (ß) zugeordnet wird,
**dadurch gekennzeichnet, daß** die Einheit (150) zum digitalen Verarbeiten des Signals dazu ausgelegt ist,
- den Phasenmodulator (131C) zu steuern, um die Phasendifferenz ΔΦₘ gemäß einer quadratischen periodischen Modulation für vielfache Zustände zu modulieren,
- das kompensierte Meßsignal (D_{Ω-COMP}) zu bestimmen, indem außerdem ein erster sequentieller Code für digitale Demodulation (CSDN-Ω) angewendet wird, der auf den zu messenden Parameter (Ω) reagiert,
- ein zusätzliches kompensiertes Signal (D_{RIN-COMP}) zu bestimmen,
- indem eine gewichtete Differenz zwischen einem ersten vom digitalisierten Meßsignal abhängigen zusätzlichen Signal und einem zweiten vom digitalisierten Referenzsignal abhängigen zusätzlichen Signal berechnet wird, wobei das digitalisierte Referenzsignal mit dem digitalisierten Meßsignal resynchroniert wird und das zweite zusätzliche Signal dem gleichen Gewichtungskoeffizienten (β) zugeordnet wird wie das zweite Signal,
- und indem ein zusätzlicher sequentieller Code für digitale Demodulation (CSDN-RIN) angewendet wird, der auf den zu messenden Parameter (Ω) nicht reagiert,
- und den Gewichtungskoeffizienten (β) einem optimalen Wert (βₒₚₜ) zuzuordnen, der den statistischen Abstand σ_{RIN} vom zusätzlichen kompensierten Signal (D_{RIN-COMP}) minimiert oder kleiner als einen gegebenen Schwellenwert macht.

2. Meßsystem (100; 200) gemäß Anspruch 1, bei dem:
- die von der Ausgangslichtwelle abgegebene Ausgangsleistung (W_{OUT}) außerdem von einem zusätzlichen Parameter abhängt,
- die digitale Signalverarbeitungseinheit (150) außerdem dazu ausgelegt ist, den zusätzlichen Parameter von einem demodulierten Meßsignal (D_{Vπ-OUT}) ausgehend zu bestimmen, das durch Anwenden eines zweiten sequentiellen Codes (CSDN-V_{π}) auf das digitale Meßsignal nicht auf den zu messenden Parameter (Ω) reagiert und auf den zusätzlichen Parameter reagiert, und bei dem
- der zusätzliche sequentielle Code für digitale Demodulation (CSDN-RIN) außerdem nicht auf den zusätzlichen Parameter reagiert.

3. Meßsystem (100; 200) gemäß Anspruch 2, bei dem:
- die Phasendifferenz ΔΦₘ im Verlauf jeder Modulationsphase aufeinanderfolgend vier konstante Werte ΔΦ_{b1} = π - α , ΔΦ_{b2} = π + α , ΔΦ_{b3} = -π + α und ΔΦ_{b4} = -π - α aufweist, wobei α eine Phasenverschiebung von weniger als π/2 ist,
- die Anwendung des ersten sequentiellen Codes für digitale Demodulation (CSDN-Ω) auf ein zu verarbeitendes Signal darin besteht, vier Werte x₁, x₂, x₃, x₄, die von diesem Signal jeweils als Antwort auf jeden der vier Phasendifferenzwerte ΔΦ_{b1}, ΔΦ_{b2}, ΔΦ_{b3}, ΔΦ_{b4} gegeben werden, zu addieren, wobei die vier Werte x₁, x₂, x₃, x₄ vor der Summierung jeweils mit -1, +1, +1, -1 oder jeweils mit +1, -1, -1, +1 multipliziert worden sind, und bei dem
- die Anwendung des zweiten sequentiellen Codes für digitale Demodulation (CSDN-V_{π}) auf ein zu verarbeitendes Signal darin besteht, die vier Werte x₁, x₂, x₃, x₄ zu addieren, wobei die vier Werte x₁, x₂, x₃, x₄ vor der Summierung jeweils mit -1, +1, -1, +1 oder jeweils mit +1, -1, +1, -1 multipliziert worden sind.

4. Meßsystem (100; 200) gemäß einem der Ansprüche 1 bis 3, bei dem beiden Demodulationen, die durch den ersten sequentiellen Code für digitale Demodulation (CSDN-Ω) und durch den zusätzlichen sequentiellen Code für digitale Demodulation (CSDN-RIN) durchgeführt worden sind, zueinander in Quadratur stehen.

5. Meßsystem (100; 200) gemäß einem der Ansprüche 1 bis 3, bei dem der zusätzliche sequentielle Code für digitale Demodulation (CSDN-RIN) auf eine periodische Komponente reagiert, die eine Frequenz aufweist, die gleich der durch eine gerade Zahl geteilten Modulationsfrequenz ist.

6. Meßsystem (100; 200) gemäß Anspruch 4 in Abhängigkeit von Anspruch 3, bei dem die Anwendung des zusätzlichen sequentiellen Codes für digitale Demodulation (CSDN-RIN) darin besteht, die vier Werte x₁, x₂, x₃, x₄ zu addieren, nachdem sie zuvor jeweils mit +1, +1, -1, -1 oder jeweils mit -1, -1, +1, +1 multipliziert worden sind.

7. Meßsystem (100; 200) gemäß Anspruch 5 in Abhängigkeit von Anspruch 3, bei dem die Anwendung des zusätzlichen sequentiellen Codes für digitale Demodulation (CSDN-RIN) darin besteht, die vier Werte x₁, x₂, x₃, x₄ zu addieren, die von dem zu verarbeitenden Signal über eine Modulationsperiode hinweg angegeben werden, und von diesen die Summe der vier Werte x₁, x₂, x₃, x₄ zu subtrahieren, die von dem zu verarbeitenden Signal über die nächste Modulationsperiode hinweg angegeben werden.

8. Meßsystem (100; 200) gemäß einem der Ansprüche 1 bis 7, bei dem die Anwendung des zusätzlichen sequentiellen Codes für digitale Demodulation (CSDN-RIN) auf ein Signal darin besteht, auf dieses Signal mindestens einen mathematischen Vorgang, mit Ausnahme einer Fourier-Transformation, anzuwenden.

9. Meßsystem (100; 200) gemäß einem der Ansprüche 1 bis 8, bei dem die Einheit für digitale Signalverarbeitung (150) dazu ausgelegt ist, den statistischen Abstand σ_{RIN} des zusätzlichen kompensierten Signal (D_{RIN-COMP}) zu bestimmen, indem ein Mittelwert des absoluten Werts der Differenz (D_{RIN-COMP}) - <(D_{RIN-COMP})> zwischen dem zusätzlichen kompensierten Signal (D_{RIN-COMP}) und dessen Mittelwert < (D_{RIN-COMP}) > berechnet wird.

10. Meßsystem (100; 200) gemäß einem der Ansprüche 1 bis 9, bei dem die Regelung des Gewichtungskoeffizienten β auf dessen optimalen Wert (βₒₚₜ) durchgeführt wird, indem:
eine Differenz Δσ_{RIN}(β) zwischen
einem ersten statistischen Abweichungswert σ_{RIN}(β+δβ) des zusätzlichen kompensierten Signals (D_{RIN-COMP}), der für einen ersten verschobenen Wert β+δβ des Gewichtungskoeffizienten β berechnet ist, und
einem zweiten statistischen Abweichungswert σ_{RIN}(β-δβ) des zusätzlichen kompensierten Signals (D_{RIN-COMP}), der für einen zweiten verschobenen Wert β-δβ des Gewichtungskoeffizienten β berechnet ist,
berechnet wird und indem
der Gewichtungskoeffizient β so geregelt wird, daß diese Differenz Δσ_{RIN}(β) annulliert wird.

11. Meßsystem (100; 200) gemäß einem der Ansprüche 1 bis 10, das zum Anwenden einer Gegenreaktionsphasenverschiebung zwischen zwei entgegengesetzt laufenden Wellen (W₁, W₂), die sich in einem Interferometer (130) ausbreiten, mittels des Phasenmodulators (131C) in Abhängigkeit vom Meßsignal (S_{OUT}) ausgelegt ist, um eine nicht gegenseitige Phasenverschiebung zwischen zwei entgegengesetzt laufenden Wellen (W₁, W₂), die vom zu messenden Parameter (Ω) abhängen, zu kompensieren.

12. Gyrometer mit einem Meßsystem (100; 200) gemäß einem der Ansprüche 1 bis 11, wobei der zu messende Parameter eine Komponente (Ω) der Drehgeschwindigkeit des Gyrometers ist.

13. Lage- und Trägheitsnavigationszentrale mit mindestens einem Gyrometer gemäß Anspruch 12.

## Claims

1. A system (100; 200) for measuring a parameter (Ω) including:
- an amplified spontaneous emission light source (100), emitting a source light wave (Ws) having a source light power that is impaired by an excess relative intensity noise,
- an optical router (120; 220) configured to:
- draw an input light wave (W_{IN}) from said source light wave (Ws), this input light wave (W_{IN}) being directed towards a Sagnac ring interferometer (130) including a polarizer (131A), a separator-recombiner (131B), a phase modulator (131C) and a polarization-maintaining fibre coil (132), the interferometer (130) receiving, as an input, said input light wave (W_{IN}) whose polarization state is selected by the polarizer (131A), and producing, as an output, a return light wave (W_{BACK}) according to the same polarization state as the input light wave (W_{IN}), the return light wave (W_{BACK}) having a return light power that depends on the parameter (Ω) to be measured and function of a phase difference ΔΦₘ between two counter-propagating waves (W₁, W₂) propagating in the interferometer (130), introduced by the phase modulator (131C),
- draw, from said return light wave (WBACK), an output light wave (W_{OUT}), this output light wave being directed towards a first optical radiation detector (141) that delivers an analog electrical measurement signal (S_{OUT}) representative of an output power of the output light wave (W_{OUT}), and to
- draw a reference light wave (W_{REF}) from said source light wave (Ws), this reference light wave (W_{REF}) having the same polarization state as the input light wave (W_{IN}) and as the return light wave (W_{BACK}), and being directed towards a second optical radiation detector (142) that delivers an analog electrical reference signal (S_{REF}) representative of a reference power of the reference light wave (WREF),
- the measurement system (100, 200) being configured to sample and digitize the analog electrical measurement signal (S_{OUT}) and, respectively, the analog electrical reference signal (S_{REF}) and obtain a digitized measurement signal, and, respectively, a digitized reference signal and
- a digital signal processing unit (150) adapted to process the digitized measurement and digitized reference signals to provide a measurement of said parameter (Ω) from a compensated measurement signal (D_{Ω-COMP}) that is determined by calculation of a weighted difference between:
- a first signal that is a function of the digitized measurement signal, and
- a second signal that is a function of the digitized reference signal, the digitized reference signal being resynchronized with the digitized measurement signal, a weighting coefficient (β) being applied to this second signal,
**characterized in that** the signal processing unit (150) is adapted to:
- control the phase modulator (131C) to modulate the phase difference ΔΦₘ according to a multi-state square-wave periodic modulation,
- determine the compensated measurement signal (D_{Ω-COMP}) by further applying a first sequential digital demodulation code (CSDN-Ω), sensitive to said parameter (Ω) to be measured,
- determine an additional compensated signal (D_{RIN-COMP}):
- by calculating a weighted difference between a first additional signal, that is a function of the digitized measurement signal, and a second additional signal, that is a function of the digitized reference signal, the digitized reference signal being resynchronized with the digitized measurement signal, the same weighting coefficient (β), applied to said second signal, being applied to the second additional signal,
- and by applying an additional sequential digital demodulation code (CSDN-RIN), insensitive to said parameter (Ω) to be measured,
- and control said weighting coefficient (β) to an optimum value (βₒₚₜ) that minimizes a statistical deviation σ_{RIN} of the additional compensated signal (D_{RIN-COMP}) or that reduces said statistical deviation σ_{RIN} below a given threshold.

2. The measurement system (100; 200) according to claim 1, wherein:
- the output power of the output light wave (W_{OUT}) further depends on an additional parameter,
- the digital signal processing unit (150) is further adapted to determine said additional parameter, based on a demodulated measurement signal (D_{Vπ-OUT}) produced by applying to the digitized measurement signal a second sequential digital demodulation code (CSDN-V_{π}), insensitive to the parameter (Ω) to be measured and sensitive to said additional parameter, and wherein
- the additional sequential digital demodulation code (CSDN-RIN) is moreover insensitive to said additional parameter.

3. The measurement system (100; 200) according to claim 2, wherein:
- the phase difference ΔΦₘ has successively, during each modulation period, four constant values ΔΦ_{b1} = π - α, ΔΦ_{b2} = π + α, ΔΦ_{b3} = - π + α and ΔΦ_{b4} = - π - α, α being a phase-shift lower than π/2,
- in response to each of the four phase difference values ΔΦ_{b1}, ΔΦ_{b2}, ΔΦ_{b3}, ΔΦ_{b4}, a signal to be processed has four values x₁, x₂, x₃, x₄ respectively, the application of the first sequential digital demodulation code (CSDN-Ω) to the signal to be processed consisting in summing the four values x₁, x₂, x₃, x₄ the four values x₁, x₂, x₃, x₄ having been multiplied, prior to this summation, by -1, +1, +1, -1 respectively, or by +1, -1, -1, +1 respectively, and wherein
- the application of the second sequential digital demodulation code (CSDN-V_{π}) to the signal to be processed consists in summing the four values x₁, x₂, x₃, x₄ , the four values x₁, x₂, x₃, x₄ having previously been multiplied by -1, +1, -1, +1 respectively, or by +1, -1, +1, -1 respectively.

4. The measurement system (100; 200) according to one of claims 1 to 3, wherein the two demodulations performed by the first sequential digital demodulation code (CSDN-Ω) and by the second sequential digital demodulation code (CSDN-RIN), respectively, are in quadrature with respect to each other.

5. The measurement system (100; 200) according to one of claims 1 to 3, wherein the additional sequential digital demodulation code (CSDN-RIN) is sensitive to a periodic component having a frequency equal to the modulation frequency divided by an even number.

6. The measurement system (100; 200) according to claim 4, when depending of claim 3, wherein the application of the additional sequential digital demodulation code (CSDN-RIN) consists in summing the four values x₁, x₂, x₃, x₄ the four values x₁, x₂, x₃, x₄ having been previously multiplied by +1, +1, -1, -1 respectively, or by -1, -1, +1, +1 respectively.

7. The measurement system (100; 200) according to claim 5, when depending of claim 3, wherein the application of the additional sequential digital demodulation code (CSDN-RIN) consists in summing the four values x₁, x₂, x₃, x₄ the signal to be processed has during a modulation period, and in subtracting from them the sum of the four values x₁, x₂, x₃, x₄ the signal to be processed has during the following modulation period.

8. The measurement system (100; 200) according to one of claims 1 to 7, wherein the application of the additional sequential digital demodulation code (CSDN-RIN) to a signal consists in applying to this signal at least one mathematical operation, except for a Fourier transform.

9. The measurement system (100; 200) according to one of claims 1 to 8, wherein the digital signal processing unit (150) is adapted to determine the statistical deviation σ_{RIN} of the additional compensated signal D_{RIN-COMP} by calculating a mean of the absolute value of the difference D_{RIN-COMP} -< D_{RIN-COMP} > between the additional compensated signal D_{RIN-COMP} and its mean value <D_{RIN-COMP}>.

10. The measurement system (100; 200) according to one of claims 1 to 9, wherein the control of the weighting coefficient β to said optimum value (βₒₚₜ) is performed by:
- calculating a difference Δσ_{RIN}(β) between:
- a first value of the statistical deviation σ_{RIN}(β+δβ) of the additional compensated signal D_{RIN-COMP}, calculated for a first offset value β+δβ of the weighting coefficient β, and
- a second value of the statistical deviation σ_{RIN}(β-δβ) of the additional compensated signal D_{RIN-COMP}, calculated for a second offset value β-δβ of the weighting coefficient β, and by
- controlling the weighting coefficient β so as to nullify this difference Δσ_{RIN}(β).

11. The measurement system (100; 200) according to one of claims 1 to 10, adapted to apply a counter-reaction phase-shift between the two counter-propagative waves (W₁, W₂) propagating in the interferometer (130), by means of said phase modulator (131C), depending on the measurement signal (S_{OUT}), so as to compensate for a non-reciprocal phase-shift between the two counter-propagative waves (W₁, W₂) that depends on the parameter (Ω) to be measured.

12. A gyroscope including a measurement system (100; 200) according to one of claims 1 to 11, said physical parameter to be measured being a component of the speed of rotation (Ω) of said gyroscope.

13. An inertial attitude or navigation unit including at least one gyroscope according to claim 12.
